# EUROPEAN PATENT SPECIFICATION

(11) **EP 4 668 425 B1**
(45) Date of publication and mention of the grant of the patent: **28.10.2026**
(21) Application number: 25166093.2
(22) Date of filing: 25.03.2025
(51) Int. Cl.: H01M 50/131, H01M 50/16, H01M 50/55, H01M 50/103, H01M 50/147, H01M 50/164, H01M 50/176, H01M 50/184, H01M 50/186, H01M 50/193, H01M 50/209, H01M 50/296, H01M 50/553

(54) **END COVER ASSEMBLY, ENERGY-STORAGE APPARATUS, AND ELECTRICITY-CONSUMPTION DEVICE**
ENDKAPPENANORDNUNG, ENERGIESPEICHERVORRICHTUNG UND ELEKTRIZITÄTSVERBRAUCHSVORRICHTUNG
ENSEMBLE COUVERCLE D'EXTRÉMITÉ, APPAREIL DE STOCKAGE D'ÉNERGIE ET DISPOSITIF DE CONSOMMATION D'ÉLECTRICITÉ

(30) Priority: 27.03.2024 CN 202410361473
(43) Date of publication of application: 24.12.2025
(73) Proprietor: Xiamen Hithium Energy Storage Technology Co., Ltd., Xiamen, Fujian 361100 (CN)
(72) Inventor: XIAO, Hepan, Xiamen, 361100 (CN); TAN, Jiben, Xiamen, 361100 (CN); XU, Weidong, Xiamen, 361100 (CN)
(74) Representative: Santarelli

(56) References cited:
- CN-A- 115 863 932
- US-A1- 2013 136 977

## Description

### TECHNICAL FIELD

This disclosure relates to the field of energy storage technology, and in particular to an end cover assembly, an energy-storage apparatus, and electricity-consumption device.

### BACKGROUND

With increasing demands for secondary energy-storage apparatuses, people have higher and higher requirements for energy density, reliability, sealing performance, and cost of the secondary energy-storage apparatus, especially for an upper cover. In an existing end cover assembly, due to poor sealing performance, electrolyte flows into the end cover assembly through an upper plastic member and an end cover during liquid injection of the energy-storage apparatus, thereby corroding structural parts in the end cover assembly, and even causing the end cover assembly to be scrapped, thus reducing the usage safety and reliability of the energy-storage apparatus.
CN115863932A relates to a terminal-post assembly, an end cover assembly, a battery, an energy-storage apparatus, and an electricity-consumption device. The terminal-post assembly includes a terminal post and a sealing ring. The terminal post includes a terminal-post body, a base, and a terminal cap. One end of the terminal-post body is connected to the base, and the other end of the terminal-post body is connected to the terminal cap. A cross-sectional area of the terminal-post body is smaller than a cross-sectional area of the base, and the cross-sectional area of the terminal-post body is smaller than a cross-sectional area of the terminal cap. The sealing ring is sleeved on a periphery of the terminal-post body and located on an upper surface of the base. The sealing ring includes a sealing-ring body and multiple first limiting structures. The multiple first limiting structures are disposed at one side of the sealing-ring body positioned facing towards an axis of the sealing ring, and the multiple first limiting structures are spaced apart from each other in a circumferential direction of the sealing-ring body. The terminal-post assembly provided in the disclosure can solve the technical problem in the related art that a sealing ring is prone to dislocation or overturning and thus the safety performance of the battery is affected.
US2013/136977A1 relates to a non-aqueous electrolyte secondary battery. The non-aqueous electrolyte secondary battery includes: a container; an electrode assembly housed in the container; an electrode terminal provided at the container; and a current collector which electrically connects the electrode terminal and the electrode assembly, wherein the container includes a wall having (i) an outer surface with a protrusion part formed to be protrude outward and (ii) an inner surface with a recess part formed corresponding in position to the protrusion part when the protrusion parts is formed, and the current collector includes a base part connected to the electrode terminal in the recess part and an arm part which extends from the base part in the direction opposite to the protrusion direction of the protrusion part, and is connected to the electrode assembly.

### SUMMARY

The invention is defined by the independent claims. The present disclosure provides an end cover assembly, an energy-storage apparatus, and electricity-consumption device. Therefore, the sealing performance of the end cover assembly is improved, a leakage path of electrolyte is blocked, corrosion of the electrolyte to the structural parts in the end cover assembly is reduced, and the usage safety and reliability of energy-storage apparatus are improved.

An end cover assembly is provided in the present disclosure. The end cover assembly includes an end cover, an upper plastic member, and a terminal post. The end cover has a first surface and a second surface positioned facing away from the first surface in a thickness direction of the end cover assembly. The terminal post includes a terminal-post body and a flange connected to one end of the terminal-post body. The end cover further defines a mounting hole. The mounting hole extends through the first surface and the second surface. A protrusion portion protrudes from the first surface. The protrusion portion surrounds the mounting hole. The protrusion portion has an end surface. The upper plastic member includes an upper-plastic-member body and a lug. The upper-plastic-member body has a step surface and an abutting surface. The step surface is positioned facing away from the abutting surface in a height direction of the upper plastic member. The lug protrudes from an edge of the step surface away from a center of the upper plastic member. The upper-plastic-member body and the lug cooperatively define a terminal-post through-hole. The terminal post passes through the terminal-post through-hole. A surface of the flange positioned facing towards the terminal-post body abuts against the step surface. The lug surrounds an outer periphery of the flange. The upper plastic member and the terminal post are accommodated in the mounting hole. The lug exceeds the first surface. The abutting surface abuts against the end surface in the thickness direction of the end cover assembly.

The lug has an inner side surface and an inclined surface. The inclined surface is connected between the inner side surface and an outer peripheral surface of the lug. The inclined surface is inclined away from the inner side surface. The inclined surface is positioned facing away from the upper-plastic-member body.

A flat surface is connected between the inner side surface and the inclined surface. The flat surface has a width greater than or equal to 0.05 mm and less than or equal to 0.4 mm.

The lug includes a sub-lug and an extension lug. The sub-lug protrudes from the edge of the step surface away from the center of the upper plastic member, and the extension lug protrudes from an edge of the abutting surface away from the center of the upper plastic member. The extension lug is spaced apart from an outer peripheral surface of the upper-plastic-member body to define a clamping gap. The protrusion portion extends into the clamping gap and is limited between the extension lug and the outer peripheral surface of the upper-plastic-member body.

A gap is defined between an end surface of the extension lug positioned facing towards the first surface of the end cover and the first surface.

The end cover assembly further includes a lower plastic member. The lower plastic member includes a lower-plastic-member body. The lower-plastic-member body has a third surface and a fourth surface. The third surface is positioned facing away from the fourth surface in a thickness direction of the lower plastic member. The lower plastic member defines an avoidance recess and an assembly hole. The avoidance recess is recessed from the fourth surface towards the third surface. The assembly hole extends through the third surface and a recess bottom-wall of the avoidance recess. The lower plastic member and the end cover are laminated. The third surface is positioned facing towards the second surface. The mounting hole is positioned facing towards the assembly hole. The terminal-post body passes through the assembly hole.

The end cover assembly further includes a lower plastic member, a sealing ring, and a pressing block. The lower plastic member is laminated on the second surface. The terminal-post body passes through the lower plastic member. The sealing ring and the pressing block are sequentially sleeved at one end of the terminal-post body positioned facing away from the flange. The pressing block abuts against the lower plastic member. The sealing ring is clamped between the pressing block and the end cover.

An end cover assembly is provided in the present disclosure. The end cover assembly includes an end cover, an upper plastic member, and a terminal post. The end cover has a first surface and a second surface positioned facing away from the first surface in a thickness direction of the end cover assembly. The terminal post includes a terminal-post body and a flange connected at one end of the terminal-post body. The end cover further defines a mounting hole. The mounting hole extends through the first surface and the second surface. A protrusion portion protrudes from the first surface. The protrusion portion surrounds the mounting hole. The protrusion portion includes a first boss and a second boss. The first boss is connected to the first surface. The first boss has an end surface positioned facing away from the first surface. The second boss protrudes from an edge of the end surface positioned facing away from an axis of the mounting hole. The upper plastic member includes an upper-plastic-member body and a lug. The upper-plastic-member body and the lug cooperatively define a terminal-post through-hole. The upper-plastic-member body has a step surface and an abutting surface. The step surface is positioned facing away from the abutting surface in an axial direction of the terminal-post through-hole. The lug includes a sub-lug and an extension lug. The sub-lug protrudes from an edge of the step surface away from a center of the upper plastic member. The extension lug is formed by bending and extending from one end of the sub-lug and further bending and extending in a direction parallel to the axial direction of the terminal-post through-hole. The extension lug is spaced apart from each of the sub-lug and the upper-plastic-member body in a radial direction of the terminal-post through-hole. The terminal post passes through the terminal-post through-hole. A surface of the flange positioned facing towards the terminal-post body abuts against the step surface. The sub-lug surrounds an outer periphery of the flange. The upper plastic member and the terminal post are accommodated in the mounting hole. The second boss extends into space between the extension lug and the sub-lug. The first boss extends into space between the extension lug and the upper-plastic-member body. The abutting surface abuts against the end surface in the thickness direction of the end cover assembly.

The terminal post includes a first metal portion and a second metal portion. The first metal portion covers the second metal portion at one side of the second metal portion away from the flange of the terminal post. A connection interface between the first metal portion and the second metal portion is a curved surface.

An energy-storage apparatus is provided in the present disclosure. The energy-storage apparatus includes the end cover assembly, a housing, and a cell. The cell is mounted in the housing. The end cover assembly is mounted at one end of the housing and configured to package the cell.

An electricity-consumption device is provided in the present disclosure. The electricity-consumption device includes the energy-storage apparatus. The energy-storage apparatus is configured to power the electricity-consumption device.

### BRIEF DESCRIPTION OF THE DRAWINGS

In order to describe technical solutions in the present disclosure more clearly, the following will give a brief introduction to accompanying drawings required for describing the implementations. Apparently, the accompanying drawings hereinafter described merely illustrate some implementations of the present disclosure. Based on the accompanying drawings, those of ordinary skill in the art can also obtain other drawings without creative effort.
FIG. 1 is an application scenario view of an energy-storage apparatus provided in embodiments of the present disclosure.
FIG. 2 is a schematic structural view of a first embodiment of the energy-storage apparatus illustrated in FIG. 1.
FIG. 3 is a schematic structural view of an end cover assembly of the energy-storage apparatus illustrated in FIG. 2.
FIG. 4 is an exploded schematic structural view of the end cover assembly illustrated in FIG. 3.
FIG. 5 is a schematic cross-sectional structural view of a terminal post of the end cover assembly illustrated in FIG. 3.
FIG. 6 is an exploded schematic cross-sectional structural view illustrating part of the end cover assembly illustrated in FIG. 3.
FIG. 7 is a schematic cross-sectional view of an upper plastic member of the end cover assembly illustrated in FIG. 3.
FIG. 8 is a schematic cross-sectional view of the end cover assembly illustrated in FIG. 3.
FIG. 9 is a schematic structural view of a second embodiment of an end cover assembly of the energy-storage apparatus illustrated in FIG. 1.
FIG. 10 is a schematic structural view of an upper plastic member of the end cover assembly illustrated in FIG. 9.
FIG. 11 is a schematic cross-sectional view of an upper plastic member of the end cover assembly illustrated in FIG. 9.
FIG. 12 is a schematic cross-sectional view of the end cover assembly illustrated in FIG. 9.
FIG. 13 is a schematic structural view of a third embodiment of an end cover assembly of the energy-storage apparatus illustrated in FIG. 1.
FIG. **14** is an exploded schematic structural view illustrated part of the end cover assembly illustrated in FIG. 13.
FIG. 15 is a schematic cross-sectional view of an end cover of the end cover assembly illustrated in FIG. 13.
FIG. 16 is a schematic cross-sectional view of an upper plastic member of the end cover assembly illustrated in FIG. 13.
FIG. 17 is a schematic cross-sectional view of the end cover assembly illustrated in FIG. 13.
FIG. 18 is an exploded schematic view of an energy-storage apparatus provided in an embodiment of the present disclosure.
FIG. 19 is a schematic view of an electricity-consumption device provided in an embodiment of the present disclosure.

### DETAILED DESCRIPTION

The following will describe technical solutions of embodiments of the present disclosure clearly and completely with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure. In the present disclosure, unless otherwise definitely specified and limited, terms "mount", "mutually connect", "connect", "fix" and the like should be broadly understood. For example, the terms may refer to fixed connection and may also refer to detachable connection or integration. The terms may refer to mechanical connection and may also refer to electrical connection or mutual communication. The terms may refer to direct mutual connection, may also refer to indirect connection through a medium and may refer to communication in two components or an interaction relationship of the two components, unless otherwise definitely limited. In addition, terms "first", "second", and the like are only used for description and cannot be understood as explicitly or implicitly indicating relative importance or implicitly indicating the number of technical features referred to herein. Therefore, features restricted by terms "first", "second", and the like can explicitly or implicitly include at least one of the features. In the context of the present disclosure, unless stated otherwise, "multiple" refers to "at least two", such as two, three, and the like.

Taking electrochemical energy storage as an example, an energy-storage apparatus is provided in the present disclosure. The energy-storage apparatus includes one group of chemical batteries. Chemical elements in the chemical batteries can be used as an energy storage medium to implement a charging/discharging process through chemical reaction or change of the energy storage medium. In brief, electric energy generated by solar energy and wind energy is stored in the chemical batteries. When the usage of external electric energy reaches a peak, the power stored in the chemical batteries is released for use, or is transferred to a place where the power is scarce for reuse.

At present, energy storage may be applied in various application scenarios, including (wind/solar) power-generation-side energy storage, grid-side energy storage, base-station-side energy storage, user-side energy storage, etc. Corresponding types of energy-storage apparatuses include the following. (1) A large-sized energy storage container applied in a grid-side energy-storage scenario. The energy storage container may serve as a high-quality active and reactive regulation power source in the grid, which can realize matching of electric energy loads in time and space, enhance the capacity for integration of renewable energy, and is of great significance in the backup of the grid system, relieving the pressure of power supply at a peak load, and peak shaving and frequency modulation. (2) A small and medium-sized energy storage cabinet applied in a user-side industrial and commercial energy-storage scenario (banks, shopping malls, etc.). The small and medium-sized energy storage cabinet mainly operates in a "peak shaving and valley filling" mode. Based on the demand for electricity, there may be a significant price difference in electricity prices at peak and valley periods. When the user has an energy storage device, in order to reduce cost, an energy storage cabinet/box may be usually charged during an electricity-price valley period, and the electricity in the energy storage device may be usually released for use during the electricity-price peak period to save electricity cost.

It may be noted that the above-mentioned energy storage container, small and medium-sized energy storage cabinet, household small energy storage container, and other devices containing energy-storage apparatuses can be understood as electricity-consumption devices.

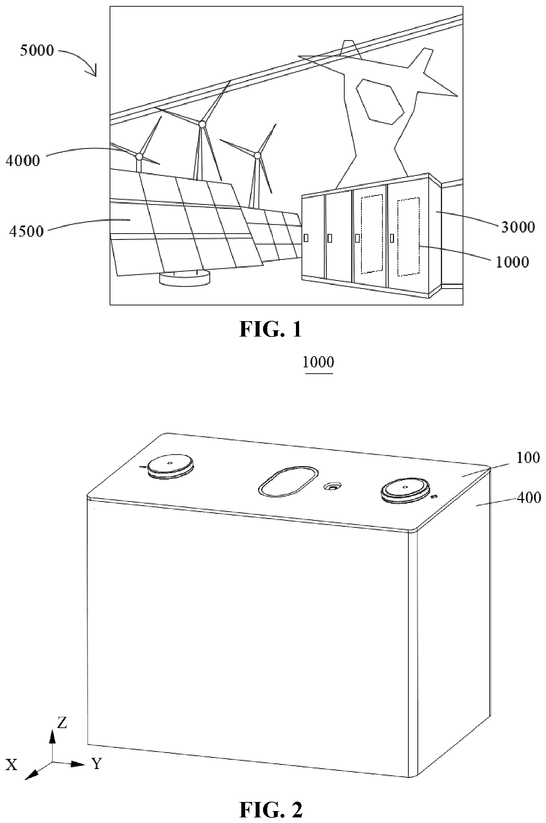

Reference can be made to FIG. 1, which is an application scenario view of an energy-storage apparatus provided in embodiments of the present disclosure.

An energy-storage apparatus 1000 provided in an embodiment of the present disclosure is applied to an energy-storage system 5000. The energy-storage system 5000 includes an electric-energy conversion apparatus (photovoltaic panel) 4500, a wind-energy conversion apparatus (wind turbine) 4000, a first electricity-consumption device (power grid), a second electricity-consumption device (base station) 3000, and an energy-storage apparatus 1000. The energy-storage system further includes an energy storage cabinet. The energy-storage apparatus 1000 is mounted in the energy storage cabinet. The energy storage cabinet may be mounted outdoors. Specifically, the first electricity-consumption device can convert solar energy into electric energy during the electricity-price valley period. The energy-storage apparatus 1000 is configured to store the electric energy and provide the electric energy to the first electricity-consumption device or the second electricity-consumption device during a power-consumption peak period, or supply electricity when there is an outage/blackout in the first electricity-consumption device or the second electricity-consumption device. The second energy conversion apparatus can convert wind energy into electric energy. The energy-storage apparatus 1000 is configured to store the electric energy and provide the electric energy to the first electricity-consumption device or the second electricity-consumption device during the power-consumption peak period, or supply electricity when there is an outage/blackout in the first electricity-consumption device or the second electricity-consumption device. The electric energy may be transmitted using a high voltage cable.

It may be noted that the above first electricity-consumption device, the second electricity-consumption device, and other devices including the energy-storage apparatus 1000 can be understood as electricity-consumption devices.

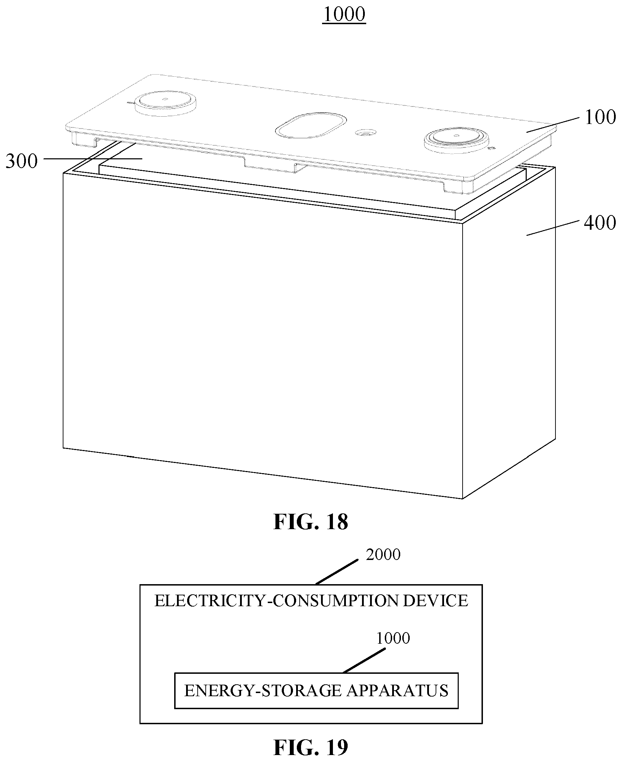

Reference can be made to FIG. 19, which is a schematic view of an electricity-consumption device provided in an embodiment of the present disclosure. An electricity-consumption device 2000 is provided in the present disclosure. The electricity-consumption device 2000 includes an energy-storage apparatus 1000. The energy-storage apparatus 1000 is configured to power the electricity-consumption device 2000.

Reference can be made to FIG. 2, which is a schematic structural view of a first embodiment of the energy-storage apparatus illustrated in FIG. 1

The energy-storage apparatus 1000 may include, but is not limited to, a battery, a battery module, a battery pack, a battery system, and the like. It can be understood that, an actual application form of the energy-storage apparatus 1000 provided in embodiments of the present disclosure may be, but is not limited to, the listed products, and may also be other application forms. For example, the energy-storage apparatus 1000 may be a secondary battery such as a nickel-metal hydride battery, a nickel-cadmium battery, a lead-acid (or lead-storage) battery, a lithium-ion battery, or a polymer lithium-ion battery. When the energy-storage apparatus 1000 is a battery, the energy-storage apparatus 1000 may be a cylindrical battery, a prismatic battery, or a battery in other shapes. In this embodiment, the energy-storage apparatus 1000 is a prismatic battery. The prismatic battery is a secondary battery. It may be noted that, the number of the energy-storage apparatus 1000 may be several, and several energy-storage apparatuses 1000 are connected in series or in parallel. In this embodiment, "several" means two or more than two.

Reference can be made to FIG. 18, which is an exploded schematic view of an energy-storage apparatus provided in an embodiment of the present disclosure. The energy-storage apparatus 1000 includes an end cover assembly 100, a housing 400, and a cell 300. The housing 400 defines an opening (not shown) and an accommodating cavity (not shown). The cell 300 includes a positive tab (not shown) and a negative tab (not shown). The end cover assembly 100 includes a first terminal-post 21 and a second terminal-post 22. When the energy-storage apparatus 1000 is assembled, first, the positive tab is welded to the first terminal-post 21, and the negative tab is welded to the second terminal-post 22; then, the cell 300 is placed in the accommodating cavity of the housing 400, and the end cover assembly 100 is sealed at the opening of the housing 400 to assemble a semi-finished battery; and finally, a series of processes such as liquid injection and the like are performed to obtain the energy-storage apparatus 1000. The present disclosure does not limit the specific structure of the energy-storage apparatus 1000.

For ease of description, in the present disclosure, a thiclcness direction of the energy-storage apparatus 1000 is defined as a Z-axis direction, a width direction of the energy-storage apparatus 1000 is defined as an X-axis direction, and a length direction is defined as of the energy-storage apparatus 1000 a Y-axis direction. The X-axis direction, Y-axis direction, and Z-axis direction are perpendicular to one another. Orientational terms such as "upper", "top", "lower", "bottom", "left", "right", and the like mentioned in the description of embodiments of the present disclosure are described based on orientations illustrated in FIG. 2 of the specification, which do not form a limitation to the energy-storage apparatus 1000 in practical application scenarios. As used in the following description, "the same", "identical", "equal", or "parallel" all allow a certain tolerance to exist.

It may be noted that, the end cover assembly 100 includes two terminal posts (not marked in the figure) and related structures such as upper plastic members, terminal-post through-holes defined on the end cover, protrusion portions, and sealing rings corresponding to the two terminal posts. The two terminal posts are respectively connected to the positive tab and the negative tab. In the following specific embodiments, for ease of description, two components with the same structure are respectively named first and second. The two terminal posts are different in structure due to different material thereof, and are also named and distinguished by the first and the second for ease of understanding.

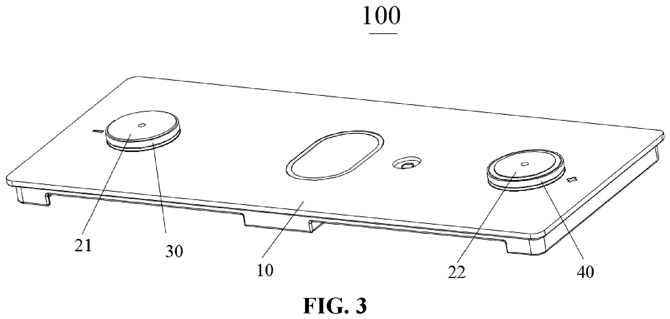

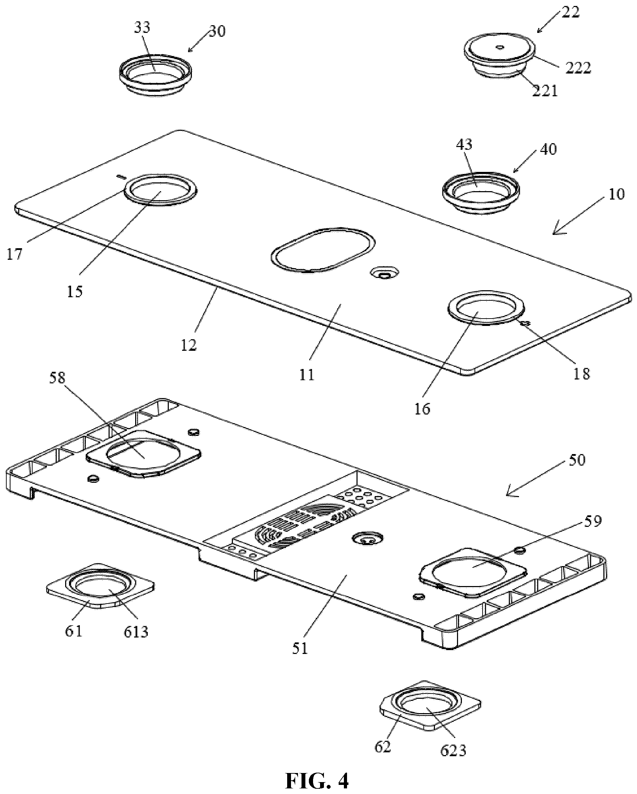

As illustrated in FIG. 3 and FIG. 4, the end cover assembly 100 includes an end cover 10, a first terminal-post 21 and a second terminal-post 22, a first upper plastic member 30 and a second upper plastic member 40, a lower plastic member 50, and a first pressing block 61 and a second pressing block 62.

The first terminal-post 21 may be a positive terminal-post and the second terminal-post 22 may be a negative terminal-post, or the first terminal-post 21 may be a negative terminal-post and the second terminal-post 22 may be a positive terminal-post. Exemplarily, the first terminal-post 21 is a negative terminal-post and the second terminal-post 22 is a positive terminal-post.

The first terminal-post 21 and the second terminal-post 22 are respectively positioned at opposite ends of the end cover assembly 100 in the length direction of the end cover assembly 100. The end cover 10 and the lower plastic member 50 are laminated in the thickness direction of the end cover assembly 100. The first upper plastic member 30 is sleeved on the first terminal-post 21, and is configured to insulate the end cover 10 from the first terminal-post 21. The second upper plastic member 40 is sleeved on the second terminal-post 22, and is configured to insulate the second terminal-post 22 from the end cover 10. The first terminal-post 21, the first upper plastic member 30, and the first pressing block 61 are sequentially disposed correspondingly, and are connected to the end cover 10 and the lower plastic member 50. The first terminal-post 21 is insulated and sealed from the end cover 10 by the cooperation of a first sealing ring 63, the first upper plastic member 30, and the lower plastic member 50. The second terminal-post 22, the second upper plastic member 40, and the second pressing block 62 are sequentially disposed correspondingly, and are connected to the end cover 10 and the lower plastic member 50. The second terminal-post 22 is insulated and sealed from the end cover 10 by the cooperation of the second upper plastic member 40, the second sealing ring 64, and the lower plastic member 50.

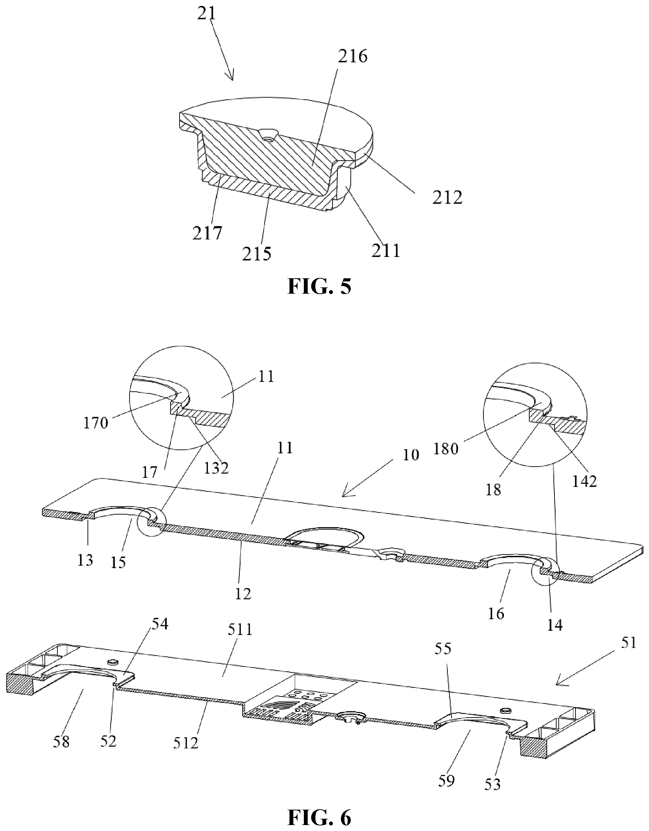

As illustrated in FIG. 5, the first terminal-post 21 includes a first terminal-post body 211 and a first flange 212. In the height direction of the first terminal-post 21, the first terminal-post body 211 is connected to a side surface of the first flange 212. In this embodiment, the first flange 212 is a circular block, and the first terminal-post body 211 protrudes from a surface of the first flange 212. The first flange 212 and the first terminal-post body 211 are disposed coaxially.

In this embodiment, the first terminal-post 21 is a negative terminal-post. The first terminal-post 21 further includes a first metal portion 215 and a second metal portion 216. In the height direction of the first terminal-post 21, the first metal portion 215 covers the second metal portion 216 at one side of the second metal portion 216 facing away from the first flange 212 of the first terminal-post 21. It can be understood that an outer surface of a post body of the first terminal-post body 211 and an outer surface of the first flange 212 facing towards the first terminal-post body 211 together constitute the first metal portion 215. A connection interface 217 is defined between the first metal portion 215 and the second metal portion 216. In this embodiment, the connection interface 217 is a curved surface, which is substantially a "bowl"-shaped interface. It can be understood that a surface of the first metal portion 215 and a surface of the second metal portion 216 that are positioned facing towards each other are curved surfaces. The first terminal-post 21 may be formed by integral stamping or machining. In this embodiment, the first terminal-post 21 may be a copper-aluminum composite structure made by a stamping process. The machining process is simple, the preparation efficiency is high, and the manufacturing cost of the first terminal-post 21 can be effectively reduced. Exemplarily, the first metal portion 215 of the first terminal-post 21 is made of copper, and the second metal portion 216 is made of aluminum. The first flange 212 is integrally formed with the second metal portion 216.

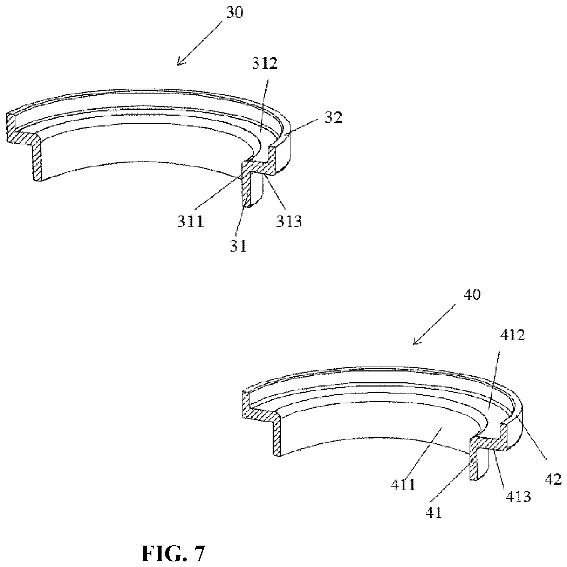

In this embodiment, the structure of the second terminal-post 22 is similar to the structure of the first terminal-post 21. As illustrated in FIG. 7, the material of the second terminal-post 22 is different from the material of the first terminal-post 21. In this embodiment, the second terminal-post 22 is a positive terminal-post. The second terminal-post 22 includes a second terminal-post body 221 and a second flange 222. In this embodiment, the second flange 222 is a circular block, and the second terminal-post body 221 protrudes from a surface of the second flange 222. The second flange 222 and the second terminal-post body 221 are disposed coaxially.

As illustrated in FIG. 4, the first pressing block 61 defines a first through-hole 613. In the thickness direction of the first pressing block 61, the first through-hole 613 extends through two surfaces of the first pressing block 61 that are positioned facing away from each other. The first through-hole 613 allows the first terminal-post 21 to pass through. The structure of the second pressing block 62 is the same as the structure of the first pressing block 61. The second pressing block 62 defines a second through-hole 623. In the thiclcness direction of the second pressing block 62, the second through-hole 623 extends through two surfaces of the second pressing block 62 that are positioned facing away from each other. The second through-hole 623 allows the second terminal-post 22 to pass through. In other embodiments, the structure of the second pressing block 62 and the structure of the first pressing block 61 may be different from each other.

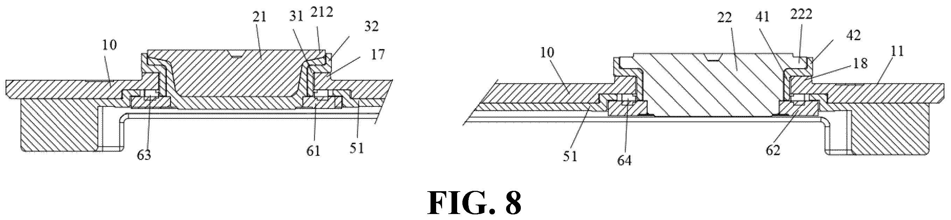

In this embodiment, the end cover assembly 100 further includes a first sealing ring 63 and a second sealing ring 64. Reference can be made to FIG. 8.

As illustrated in FIG. 6, the end cover 10 is a substantially rectangular plate body. In this embodiment, the end cover 10 is a smooth aluminum sheet. The end cover 10 has a first surface 11 and a second surface 12. The first surface 11 and the second surface 12 are positioned facing away from each other in the thickness direction of the end cover 10.

The end cover 10 defines a first mounting recess 13 and a second mounting recess 14. The first mounting recess 13 and the second mounting recess 14 are respectively positioned at opposite ends of the end cover 10 in the length direction of the end cover 10. The first mounting recess 13 is a substantially rectangular recess body. An opening of the first mounting recess 13 is positioned on the second surface 12. The first mounting recess 13 is recessed from the second surface 12 towards the first surface 11. The first mounting recess 13 has a first recess-bottom-wall 132.

In this embodiment, the structure of the second mounting recess 14 is the same as the structure of the first mounting recess 13. An opening of the second mounting recess 14 is positioned on the second surface 12. The second mounting recess 14 is recessed from the second surface 12 towards the first surface 11. The second mounting slot 14 has a second recess-bottom-wall 142.

The end cover 10 further defines a first mounting hole 15 and a second mounting hole 16. The first mounting hole 15 and the second mounting hole 16 are positioned at both ends of the end cover 10 in the length direction of the end cover 10, respectively. In the thickness direction of the end cover 10, the first mounting hole 15 extends through the first surface 11 and the first recess-bottom-wall 132. The second mounting hole 16 extends through the first surface 11 and the second recess-bottom-wall 142. In other embodiments, the structure of the first mounting recess 13 and the structure of the second mounting recess 14 may be different from each other.

The end cover 10 further includes a first protrusion portion 17 and a second protrusion portion 18. The first protrusion portion 17 has a closed annular structure, and protrudes from the first surface 11 and surrounds the first mounting hole 15. In this embodiment, the first protrusion portion 17 is connected to a hole wall of the first mounting hole 15, and is coaxial with the first mounting hole 15. Exemplarily, the first protrusion portion 17 and the second protrusion portion 18 each have a circular ring structure. In the radial direction of the first mounting hole 15, the first protrusion portion 17 has a certain width, the outer diameter of the first protrusion portion 17 is greater than the diameter of the first mounting hole 15, and the inner diameter of the first protrusion portion 17 is the same as the diameter of the first mounting hole 15. The first protrusion portion 17 has a first end surface 170. The first end surface 170 is a surface of a free end of the first protrusion portion 17 away from the first surface 11.

In this embodiment, the second protrusion portion 18 has the same structure as the first protrusion portion 17. The second protrusion portion 18 protrudes from the first surface 11, surrounds the second mounting hole 16, and is coaxial with the second mounting hole 16. In the radial direction of the second mounting hole 16, the second protrusion portion 18 has a certain width, the outer diameter of the second protrusion portion 18 is greater than the diameter of the second mounting hole 16, and the inner diameter of the second protrusion portion 18 is the same as the diameter of the second mounting hole 16. The second protrusion portion 18 has a second end surface 180. The second end surface 180 is a surface of a free end of the second protrusion portion 18 away from the first surface 11. The above "same" may allow for a certain tolerance range. In this embodiment, an angle between the first surface 11 and each of the first protrusion portion 17 and the second protrusion portion 18 is 90 degrees.

The lower plastic member 50 includes a lower-plastic-member body 51. The lower-plastic-member body 51 is a substantially rectangular thin plate. The length of the lower-plastic-member body 51 is the same as the length of the end cover 10, and the width of the lower-plastic-member body 51 is the same as the length of the end cover 10, where a certain tolerance range is allowed. The lower-plastic-member body 51 has a third surface 511 and a fourth surface 512. In the thickness direction of the lower plastic member 50, the third surface 511 and the fourth surface 512 are positioned facing away from each other. In this embodiment, the lower plastic member 50 may be an integral structure made of a plastic material. In other embodiments, the lower plastic member 50 may include two lower plastic sub-members.

The lower plastic member 50 defines a first avoidance recess 52 and a second avoidance recess 53. The first avoidance recess 52 and the second avoidance recess 53 are respectively positioned at opposite sides of the lower plastic member 50 in the length direction of the lower plastic member 50. The opening of the first avoidance recess 52 is positioned on the fourth surface 512. The first avoidance recess 52 is recessed from the fourth surface 512 towards the third surface 511. The first avoidance recess 52 has a first bottom-wall (not marked in the figure). In this embodiment, the structure of the second avoidance recess 53 is the same as the structure of the first avoidance recess 52. The opening of the second avoidance recess 53 is positioned on the fourth surface 512. The second avoidance recess 53 is recessed from the fourth surface 512 towards the third surface 511. The second avoidance recess 53 has a second bottom-wall (not marked in the figure).

The lower plastic member 50 further includes a first protrusion 54 and a second protrusion 55. The first protrusion 54 and the second protrusion 55 protrudes from the third surface 511, and are respectively positioned at opposite ends of the lower-plastic-member body 51 in the length direction of the lower-plastic-member body 51. The first avoidance recess 52 is recessed from the fourth surface 512 towards the third surface 511 and protrudes from the third surface 511 to form the first protrusion 54. The shape of the first protrusion 54 matches the shape of the first avoidance recess 52. In this embodiment, the structure of the second protrusion 55 is the same as the structure of the first protrusion 54. The second avoidance recess 53 is recessed from the fourth surface 512 towards the third surface 511 and protrudes from the third surface 511 to form the second protrusion 55.

The lower plastic member 50 further defines a first assembly hole 58 and a second assembly hole 59. The first assembly hole 58 extends through a surface of the first protrusion 54 and the first bottom-wall of the first avoidance recess 52. It can be understood that the first assembly hole 58 extends through the third surface 511 and the first bottom-wall, and the first assembly hole 58 and the first avoidance recess 52 are in communication with each other for the first terminal-post 21 to pass through. The first assembly hole 58 is a circular hole. In this embodiment, the structure of the second assembly hole 59 is the same as the structure of the first assembly hole 58. The second assembly hole 59 extends through a surface of the second protrusion 55 and the second bottom-wall of the second avoidance recess 53. The second assembly hole 59 and the second avoidance recess 53 are in communication with each other for the second terminal-post 22 to pass through. In other embodiments, the structure of the first assembly hole 58 and the structure of the second assembly hole 59 may be different from each other.

As illustrated in FIG. 7, the first upper plastic member 30 and the second upper plastic member 40 are circular ring-shaped plastic member, and the circular ring-shaped plastic member can match the cylindrical first terminal-post 21. When the first terminal-post is rectangular post, the shape of the first upper plastic member 30 and the shape of the second upper plastic member 40 may also change accordingly. The first upper plastic member 30 includes a first upper-plastic-member body 31 and a first lug 32. In the height direction of the first upper plastic member, the first upper-plastic-member body 31 is connected to the first lug 32. In this embodiment, the first upper-plastic-member body 31 has a substantially L-shaped cross section, and has a first inner-ring surface 311, a first step surface 312, and a first abutting surface 313. The first inner-ring surface 311 is connected to the first step surface 312. There is an angle between the first inner-ring surface 311 and the first step surface 312. In this embodiment, the angle between the first inner-ring surface 311 and the first step surface 312 is 90 degrees. The first inner-ring surface 311 is a surface of the first upper-plastic-member body 31 facing towards the central axis of the first upper-plastic-member body 31. The first step surface 312 extends in a radial direction of a first terminal-post through-hole 33. The first step surface 312 and the first abutting surface 313 are positioned facing away from each other. The first abutting surface 313 is connected to the outer peripheral surface of the first upper-plastic-member body 31.

The first lug 32 protrudes from an edge of a surface of the first step surface 312 positioned facing away from the first upper-plastic-member body 31, and is away from the first upper-plastic-member body 31. The inner diameter of the first lug 32 is greater than the inner diameter of the first upper-plastic-member body 31. In other embodiments, if the terminal post has a rectangular post shape, the first terminal-post through-hole of the first upper plastic member 30 may be rectangular. There is an angle between the first lug 32 and the first step surface 312. In this embodiment, the angle between the first lug 32 and the first step surface 312 is 90 degrees. In other embodiments, a connection of the first inner-ring surface 311 and the first step surface 312 and a connection of the first lug 32 and the first step surface 312 each may define an arc chamfer, but the overall angle between the first inner-ring surface 311 and the first step surface 312, and the overall angel between the first lug 32 and the first step surface 312 each may be understood as 90 degrees.

The first upper plastic member 30 further defines a first terminal-post through-hole 33. The first terminal-post through-hole 33 allows the first terminal-post 21 to pass through. The first upper-plastic-member body 31 and the first lug 32 cooperatively define the first terminal-post through-hole 33. It can be understood that the first inner-ring surface 311 and a surface of the first lug 32 facing towards the hole center together are a hole wall of the first terminal-post through-hole 33. In this embodiment, the first upper plastic member 30 is an independent injection-molding component, and multiple first upper plastic members 30 can be formed simultaneously in a one-mold multi-cavity process, so that the cost can be reduced.

In this embodiment, the structure of the second upper plastic member 40 is the same as the structure of the first upper plastic member 30. The second upper plastic member 40 includes a second upper-plastic-member body 41 and a second lug 42. A connection relationship between the second upper-plastic-member body 41 and the second lug 42 can be referred to the first upper plastic member 30, which will not be repeated here. The second upper-plastic-member body 41 has a second inner-ring surface 411, a second step surface 412, and a second abutting surface 413. The second step surface 412 and the second abutting surface 413 are positioned facing away from each other. The second abutting surface 413 is connected to the outer peripheral surface of the second upper-plastic-member body 41.

The second upper plastic member 40 further defines a second terminal-post through-hole 43. The second terminal-post through-hole 43 allows the second terminal-post 22 to pass through. The second upper-plastic-member body 41 and the second lug 42 cooperatively define the second terminal-post through-hole 43.

As illustrated in FIG. 8, in this embodiment, the end cover 10 and the lower plastic member 50 are laminated in the Z-axis direction. The second surface 12 of the end cover 10 is positioned facing towards the third surface 511 of the lower plastic member 50. The fourth surface 512 of the lower-plastic-member body 51 is positioned facing towards the housing 400 and positioned facing away from the end cover 10. The first protrusion 54 of the lower plastic member 50 is in fit with the first mounting recess 13 of the end cover 10. In other words, the first protrusion 54 is accommodated in the first mounting recess 13, and the first mounting hole 15 is in communication with and coaxial with the first assembly hole 58 of the lower plastic member 50. The surface of the first protrusion 54 abuts against the first recess-bottom-wall 132 of the first mounting recess 13. The second protrusion 55 of the lower plastic member 50 is in fit with the second mounting recess 14 of the end cover 10. In other words, the second protrusion 55 is accommodated in the second mounting recess 14, and the second mounting hole 16 is coaxial with the second assembly hole 59. The surface of the second protrusion 55 abuts against the second recess-bottom-wall 142 of the second mounting recess 14.

The first upper plastic member 30 is sleeved on the outer periphery of the first terminal-post 21. The first terminal-post body 211 sleeved with the first upper plastic member 30 sequentially passes through the first mounting hole 15 of the end cover 10 and the first assembly hole 58 of the lower plastic member 50, and extends into the first avoidance recess 52. The first upper-plastic-member body 31 is positioned between the first terminal-post body 211 and the end cover 10, and is configured to insulate the first terminal-post 21 from the end cover 10. The first upper-plastic-member body 31 surrounds the outer peripheral surface of the first terminal-post body 211, and the first lug 32 surrounds the outer peripheral surface of the first flange 212 at the periphery of the first terminal-post body 211. The first inner-ring surface 311 is positioned facing towards the outer periphery of the first terminal-post body 211. The first lug 32 surrounds the outer peripheral surface of the first flange 212. The first lug 32 at least covers the connection (connection interface) between the first metal portion 215 and the second metal portion 216, that is, the height of the first lug 32 exceeds the height of the connection (interface) between the first metal portion 215 and the second metal portion 216 in the thickness direction of the end cover assembly, which can be understood as the highest height of the first lug 32 compared to the end cover is higher than the interface. The first lug 32 can protect the first terminal-post 21, and prevent the external environment from causing corrosion at the interface of the first terminal-post 21, so that the energy efficiency of the cell is not affected, and product consistency is improved. The first abutting surface 313 of the first upper-plastic-member body 31 positioned facing away from the first lug 32 abuts against the first end surface 170 of the first protrusion portion 17 positioned facing away from the end cover 10.

A gap is defined between the first upper-plastic-member body 31 and the first bottom-wall of the first avoidance recess 52 of the lower plastic member 50, and is used for accommodating the first sealing ring 63. The first pressing block 61 and the first sealing ring 63 are accommodated in the first avoidance recess 52, and is sleeved on the first terminal-post body 211 at one end of the first terminal-post body 211 positioned in the first avoidance recess 52. The first sealing ring 63 is clamped between the end cover 10 and the first pressing block 61. The first upper plastic member 30 and the first sealing ring 63 seal the first pressing block 61, the lower plastic member 50, and the end cover 10.

In this embodiment, compared with the first surface 11 of the end cover 10, the first protrusion portion 17 protrudes from the first surface 11 of the end cover 10 and surrounds the periphery of the first mounting hole 15. After the electrolyte is injected towards the first surface 11 of the end cover, if the electrolyte splashes out and falls on the first surface 11 of the end cover 10, the electrolyte will be blocked by the first protrusion portion 17. Therefore, firstly, the electrolyte is prevented from entering the inside of the end cover assembly 100 through the gap between the first upper plastic member 30 and the end cover 10, thereby avoiding corrosion of the first terminal-post 21 and the first upper plastic member 30. Secondly, the electrolyte is prevented from being accumulated in the gap between the first upper plastic member 30 and the end cover 10, and the electrolyte is prevented from flowing out when a top patch is pasted, avoiding the following disadvantages: corrosion of the top patch, a decreased in the insulation performance of the whole cell, and a short circuit.

In the thickness direction of the end cover assembly 100, the first upper-plastic-member body 31 of the first upper plastic member 30 abuts against the first protrusion portion 17, and the first lug 32 surrounding the first flange 212 is farther from the first surface 11 than the first upper-plastic-member body 31, so that the gap between the first flange 212 and the first upper plastic member 30 is farther from the first surface 11, that is, the gap between the first upper plastic member 30 and the first terminal-post 21 is raised relative to the end cover 10. Therefore, the splashed electrolyte during injection is less likely to enter the gap between the first upper plastic member 30 and the first terminal-post 21, preventing electrolyte from flowing into the spaces between the first terminal-post, the first lower plastic member 50, and the first pressing ring 61. Therefore, the insulation performance of the cell is improved and the possibility of corrosion of the splashed electrolyte on the first upper plastic member 30 is reduced, thereby improving the strength of the first upper plastic member 30.

Similarly, the assembly relationship between the second terminal-post 22, the second upper plastic member 40, the second pressing block 62, the second sealing ring 64, the end cover 10, and the lower plastic member 50 can be referred to the above description of the assembly of the first terminal-post 21 and related structures thereof, and the resulting effects can also refer to the above description, which will not be repeated here.

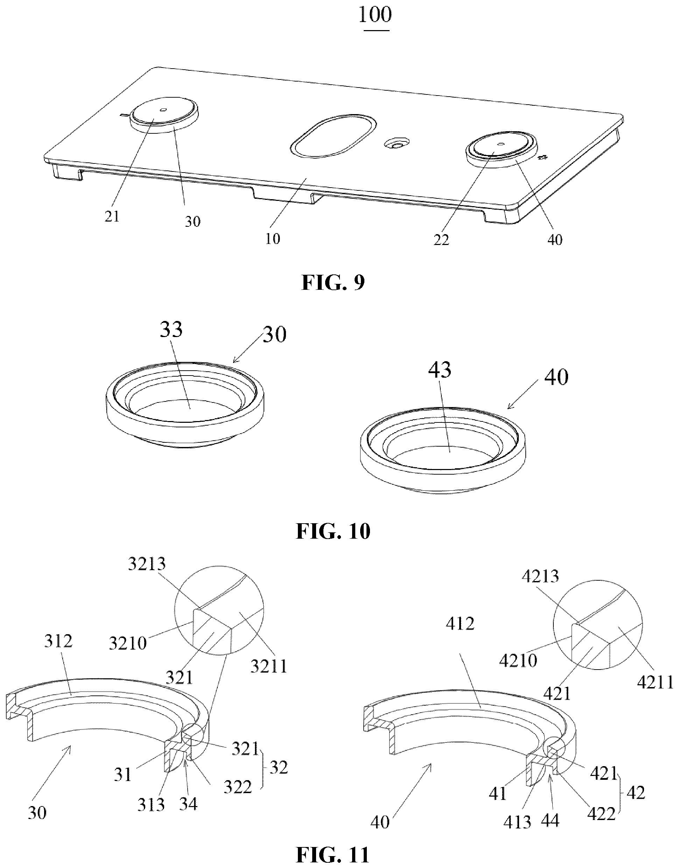

As illustrated in FIG. 9, an energy-storage apparatus (not shown) of the second embodiment of the present disclosure includes an end cover assembly, a housing, and a cell. The specific assembly relationship can be referred to the energy-storage apparatus 1000 of the first embodiment described in FIG. 2.

The structure of the upper plastic member of the end cover assembly 100 in this embodiment is different from the structure of the upper plastic member of the end cover assembly 100 in the first embodiment. It may be noted that, in this embodiment, the description and accompanying drawings of parts identical to the end cover assembly 100 described in FIG. 3 are directly referred to, and will not be described in detail. The end cover assembly 100 includes an end cover 10, a first terminal-post 21 and a second terminal-post 22, a first upper plastic member 30 and a second upper plastic member 40, a lower plastic member 50, and a first pressing block 61 and a second pressing block 62. The first terminal-post 21 and the second terminal-post 22 are respectively positioned at opposite ends of the end cover assembly 100 in the length direction of the end cover assembly 100. The end cover 10 and the lower plastic member 50 are laminated in the thickness direction of the end cover assembly 100. The first upper plastic member 30 is sleeved on the first terminal-post 21 and is configured to insulate the end cover 10 from the first terminal-post 21. The second upper plastic member 40 is sleeved on the second terminal-post 22 and is configured to insulate the second terminal-post 22 from the end cover 10. The first terminal-post 21, the first upper plastic member 30, and the first pressing block 61 are sequentially disposed correspondingly, and are connected to the end cover 10 and the lower plastic member 50. The first terminal-post 21 is insulated and sealed from the end cover 10 by the cooperation of a first sealing ring 63, the first upper plastic member 30, and the lower plastic member 50. The second terminal-post 22, the second upper plastic member 40, and the second pressing block 62 are sequentially disposed correspondingly, and are connected to the end cover 10 and the lower plastic member 50. The second terminal-post 22 is insulated and sealed from the end cover 10 by the cooperation of the second upper plastic member 40, the second sealing ring 64, and the lower plastic member 50.

The first terminal-post 21 includes a first terminal-post body 211 and a first flange 212. The first terminal-post 21 is a negative terminal-post. The first terminal-post 21 further includes a first metal portion 215 and a second metal portion 216. A connection interface 217 is defined between the first metal portion 215 and the second metal portion 216. The second terminal-post 22 includes a second terminal-post body 221 and a second flange 222. The first pressing block 61 defines a first through-hole 613. A first sealing ring 63 is provided on a surface of the first pressing block 61. The second pressing block 62 defines a second through-hole 623. A second sealing ring 64 is provided on a surface of the second pressing block 62. The end cover 10 includes a first surface 11, a second surface 12, a first mounting recess 13, a first mounting hole 15, a second mounting hole 16, a second mounting recess 14, a first protrusion portion 17, and a second protrusion portion 18. The specific structures and fitting relationships of these components can be referred to the detailed description of the first embodiment.

As illustrated in FIG. 10 and FIG. 11 together, in this embodiment, the first upper plastic member 30 includes a first upper-plastic-member body 31 and a first lug 32. The first upper-plastic-member body 31 has a first inner-ring surface 311, a first step surface 312, and a first abutting surface 313. The first upper-plastic-member body 31 and the first lug 32 cooperatively define the first terminal-post through-hole 33. Different from the first embodiment, the first lug 32 includes a first sub-lug 321 and a first extension lug 322, the first sub-lug 321 protrudes from an edge of the first step surface 312 away from the center of the first upper plastic member 30, and the first extension lug 322 protrudes from an edge of the first abutting surface 313 away from the center of the first upper plastic member 30. In the Z-axis direction, that is, in the height direction of the first upper plastic member, the first sub-lug 321 is positioned facing away from the first extension lug 322.

In this embodiment, the first sub-lug 321 and the first extension lug 322 are both annular structures. It can be understood that, in one embodiment, the first upper-plastic-member body 31 has a T-shaped cylindrical shape as a whole, and includes a first section (not marked in the figure) and a second section (not marked in the figure) connected to the first section. The first section is cylindrical, and the second section is annular sheet-shaped. The second section is connected to the first section at one end of the first section in the axial direction of the first section, and extends away from the axial center of the first section. The first step surface 312 and the first abutting surface 313 are two surfaces of the second section in the thickness direction of the second section.

A surface of the first sub-lug 321 positioned facing away from the first upper-plastic-member body 31 is coplanar with a surface of the first extension lug 322 positioned facing away from the first upper-plastic-member body 31. The first sub-lug 321 has a first inner side surface 3210 and a first inclined surface 3211. The first inner surface 3210 is connected to the first step surface 312. There is an angle between the first inner surface 3210 and the first step surface 312, and in this embodiment, the angle is 90 degrees. The first inclined surface 3211 is connected between the first inner side surface 3210 and the outer peripheral surface of the first sub-lug 321. The first inclined surface 3211 is inclined away from the first inner side surface 3210. The first inclined surface 3211 is positioned facing away from the first extension lug 322.

In one embodiment, a connection of the first inner surface 3210 and the first inclined surface 3211 is a flat surface, which is designated as a first flat surface 3213. The first flat surface 3213 and the first step surface 312 have the same orientation. The first inclined surface 3211 is inclined with respect to the first flat surface 3213. In this embodiment, the width of the first flat surface is greater than 0.05 mm and less than 0.4 mm. The width direction of the first flat surface is the radial direction of the first terminal-post through-hole. Therefore, during injection molding of the first upper plastic member 30, the sharp angle at the connection of the first inclined surface 3211 and the first inner side surface 3210 are avoided to prevent corner sink, so that the measurement of the overall dimensional accuracy of the first upper plastic member is not affected, and the stability of the dimensional accuracy of the first upper plastic injection molding is improved.

The first extension lug 322 is positioned outside the first upper-plastic-member body 31 and is spaced apart from the first upper-plastic-member body 31. A first clamping sub-gap 34 is defined between the first extension lug 322 and the first upper-plastic-member body 31.

In this embodiment, the second upper plastic member 40 has the same structure as the first upper plastic member 30. The second upper plastic member 40 includes a second upper-plastic-member body 41 and a second lug 42. The second upper-plastic-member body 41 has a second inner-ring surface 411, a second step surface 412, and a second abutting surface 413. The second upper-plastic-member body 41 and the second lug 42 cooperatively define the second terminal-post through-hole 43. The second lug 42 includes a second sub-lug 421 and a second extension lug 422. The second sub-lug 421 protrudes from an edge of the second step surface 412 away from the center of the second upper plastic member 40, and the second extension lug 422 protrudes from an edge of the second abutting surface 413 away from the center of the second upper plastic member 40. In the Z-axis direction, that is, in the height direction of the second upper plastic member 40, the second sub-lug 421 is positioned facing away from the second extension lug 422. In this embodiment, the second sub-lug 421 and the second extension lug 422 are both annular structures.

It can be understood that, in one embodiment, the second upper-plastic-member body 41 has a T-shaped cylindrical shape as a whole, and includes a first section (not marked in the figure) and a second section (not marked in the figure) connected to the first section. The first section is cylindrical, and the second section is annular sheet-shaped. The second section is connected to the first section at one end of the first section in the axial direction of the first section, and extends away from the axial center of the first section. The second step surface 412 and the second abutting surface 413 are two surfaces of the second section in the thickness direction of the second section.

A surface of the second sub-lug 421 positioned facing away from the second upper-plastic-member body 41 is coplanar with a surface of the second extension lug 422 positioned facing away from the second upper-plastic-member body 41. The second sub-lug 421 has a second inner side surface 4210 and a second inclined surface 4211. The second inner surface 4210 is connected to the second step surface 412. There is an angle between the second inner surface 4210 and the second step surface 412, and in this embodiment, the angle is 90 degrees. The second inclined surface 4211 is connected between the second inner side surface 4210 and the outer peripheral surface of the second sub-lug 421. The second inclined surface 4211 is inclined away from the second inner side surface 4210. The second inclined surface 4211 is positioned facing away from the second extension lug 422.

In one implementation, a connection of the second inner side surface 4210 and the second inclined surface 4211 is a flat surface, which is designated as a second flat surface 4213. The second flat surface 4213 and the second step surface 412 have the same orientation. The second inclined surface 4211 is inclined with respect to the second flat surface 4213.

The second extension lug 422 is positioned outside the second upper-plastic-member body 41 and is spaced apart from the second upper-plastic-member body 41. A second clamping sub-gap 44 is defined between the second extension lug 422 and the second upper-plastic-member body 41.

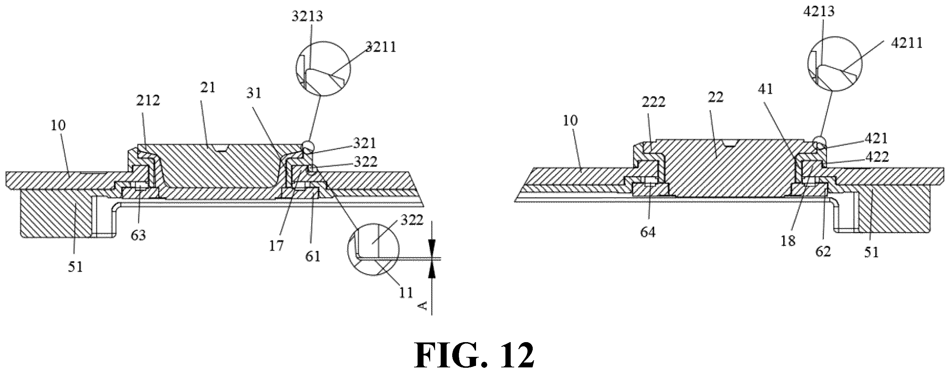

As illustrated in FIG. 12, in this embodiment, the assembly and position relationship of the end cover 10, the first terminal-post 21 and the second terminal-post 22, the first upper plastic member 30 and the second upper plastic member 40, the lower plastic member 50, and the first pressing block 61 and the second pressing block 62 of the end cover assembly 100 can be specifically referred to the assembly relationship of the first embodiment. Hereinafter, only the assembly relationship of this embodiment different from the first embodiment will be described. Specifically, after the end cover 10, the first terminal-post 21 and the second terminal-post 22, the first upper plastic member 30 and the second upper plastic member 40, the lower plastic member 50, and the first pressing block 61 and the second pressing block 62 are all assembled and connected, the first upper-plastic-member body 31 surrounds the outer peripheral surface of the first terminal-post body 211, and the first sub-lug 321 surrounds the outer peripheral surface of the first flange 212 at the periphery of the first terminal-post body 211, and the first inner-ring surface 311 is positioned facing towards the outer periphery of the first terminal-post body 211. The first sub-lug 321 surrounds the outer peripheral surface of the first flange 212. The first sub-lug 321 at least covers the connection (connection interface) between the first metal portion 215 and the second metal portion 216, to protect the connection interface.

The first protrusion portion 17 is inserted into the first clamping sub-gap 34. The first protrusion portion 17 is clamped between the first upper-plastic-member body 31 and the first extension lug 322. The first abutting surface 313 of the first upper plastic member 30 abuts against the first end surface 170 of the first protrusion portion 17 positioned facing away from the end cover 10. There is a gap A between a free end of the first extension lug 322 positioned facing away from the first sub-lug 321 and the first surface 11 around the first protrusion portion 17. The gap A can prevent the first upper plastic member 30 from abutting against the end cover 10, thereby preventing the unstable compression amount of the first sealing ring 63. In addition, when it is ensured that the gap *A* has a certain size, the capillary phenomenon of the liquid caused by the gap being too small (that is, when a gap is too small, the gap will adsorb the liquid falling on the surface of the gap and suck the liquid into the gap) can be avoided, so that the problem that the electrolyte is introduced into the battery through the gap A can be solved. The first inclined surface 3211 is positioned facing away from the first surface 11 and is inclined towards the first surface 11. The first flat surface 3213 and the first surface 11 have the same orientation. The first flat surface 3213 is positioned at an end of the gap between the first terminal-post 21 and the first lug 32 of the first upper plastic member 30.

In this embodiment, in addition to achieving the technical effect described in the first embodiment, since the first protrusion portion 17 is inserted into the first clamping sub-gap 34, that is, the first extension lug 322 and the first upper-plastic-member body 31 wrap the first protrusion portion 17, the creepage distance along the first upper plastic member 30 between the first terminal-post 21 and the end cover 10 can be increased. In addition, in the radial direction of the first upper plastic member 30, the distance from the outer peripheral surface of the first lug 32 to the recess peripheral wall of the first mounting recess 13 of the end cover 10 is reduced. The thickness of the recess bottom-wall of the first mounting recess 13 is thinner than other parts of the end cover 10. The recess bottom-wall of the first mounting recess 13 overlaps, in the thickness direction of the end cover, the contact width of the first upper-plastic-member body 31 and the first protrusion portion 17 and the width of the first lug 32. Therefore, the strength of the recess bottom-wall of the first mounting recess 13 can be improved, that is, the strength of the recess bottom-wall of the first mounting recess 13 around the first mounting hole 15 can be improved, so that during assembly of the first terminal-post 21, the thrust on the first terminal-post 21 can be improved and the assembly stability can be ensured.

Furthermore, in this embodiment, a surface of the first lug 32 positioned facing away from the end cover 10 is the first inclined surface 3211, so that the shrinkage of the first upper plastic member 30 can be avoided from defining pits during injection molding. The first inclined surface 3211 can prevent the accumulation of the electrolyte when the electrolyte is injected, thereby preventing the electrolyte from entering the inside of the end cover assembly through the gap between the first upper plastic member 30 and the first terminal-post 21.

Similarly, the assembly relationship between the second terminal-post 22, the second upper plastic member 40, the second pressing block 62, the second sealing ring 64, the end cover 10, and the lower plastic member 50 of the second embodiment can be referred to the above description of the assembly of the first terminal-post 21 and related structures thereof, and the resulting effects can also refer to the above description, which will not be repeated here.

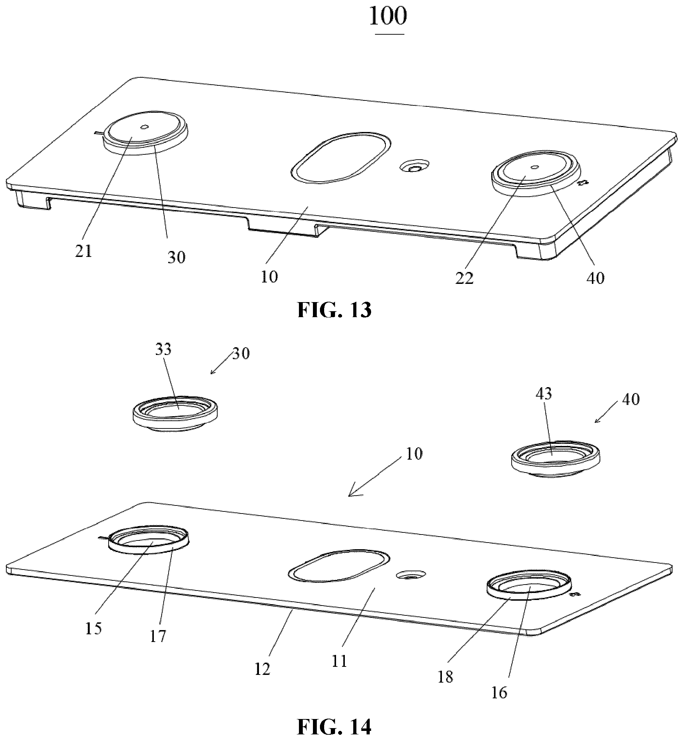

As illustrated in FIG. 13, an energy-storage apparatus (not shown) of the third embodiment of the present disclosure includes an end cover assembly, a housing, and a cell. The specific assembly relationship can be referred to the energy-storage apparatus 1000 of the first embodiment described in FIG. 2. The structure of the upper plastic member of the end cover assembly 100 and the structure of the end cover 10 in fit with the upper plastic member described in this embodiment are different from the structure of the upper plastic member of the end cover assembly 100 and the structure of the end cover 10 in fit with the upper plastic member described in the first embodiment, the structure of the upper plastic member of the end cover assembly 100 and the structure of the end cover 10 in fit with the upper plastic member are provided. It may be noted that, in this embodiment, parts identical to the end cover assembly 100 described in FIG. 3 are directly referred to, and will not be described in detail.

As illustrated in FIG. 14, the end cover assembly 100 includes an end cover 10, a first terminal-post 21 and a second terminal-post 22, a first upper plastic member 30 and a second upper plastic member 40, a lower plastic member 50, and a first pressing block 61 and a second pressing block 62. The first terminal-post 21 and the second terminal-post 22 are respectively positioned at opposite ends of the end cover assembly 100 in the length direction of the end cover assembly 100. The end cover 10 and the lower plastic member 50 are laminated in the thickness direction of the end cover assembly 100. The first upper plastic member 30 is sleeved on the first terminal-post 21 and is configured to insulate the end cover 10 from the first terminal-post 21. The second upper plastic member 40 is sleeved on the second terminal-post 22 and is configured to insulate the second terminal-post 22 from the end cover 10. The first terminal-post 21, the first upper plastic member 30, and the first pressing block 61 are sequentially disposed correspondingly, and are connected to the end cover 10 and the lower plastic member 50. The first terminal-post 21 is insulated and sealed from the end cover 10 by the cooperation of the first sealing ring 63, the first upper plastic member 30, and the lower plastic member 50. The second terminal-post 22, the second upper plastic member 40, and the second pressing block 62 are sequentially disposed correspondingly, and are connected to the end cover 10 and the lower plastic member 50. The second terminal-post 22 is insulated and sealed from the end cover 10 by the cooperation of the second upper plastic member 40, the second sealing ring 64, and the lower plastic member 50.

The first terminal-post 21 includes a first terminal-post body 211 and a first flange 212. The first terminal-post 21 is a negative terminal-post. The first terminal-post 21 further includes a first metal portion 215 and a second metal portion 216. A connection interface 217 is defined between the first metal portion 215 and the second metal portion 216. The second terminal-post 22 includes a second terminal-post body 221 and a second flange 222. The first pressing block 61 defines a first through-hole 613. A first sealing ring 63 is provided on a surface of the first pressing block 61. The second pressing block 62 defines a second through-hole 623. A second sealing ring 64 is provided on one surface of the second pressing block 62. The end cover 10 has a first surface 11, a second surface 12, a first mounting recess 13, a first mounting hole 15, a second mounting hole 16, a second mounting recess 14, a first protrusion portion 17, and a second protrusion portion 18. The specific structures and fitting relationships of these components can be referred to the detailed description of the first embodiment.

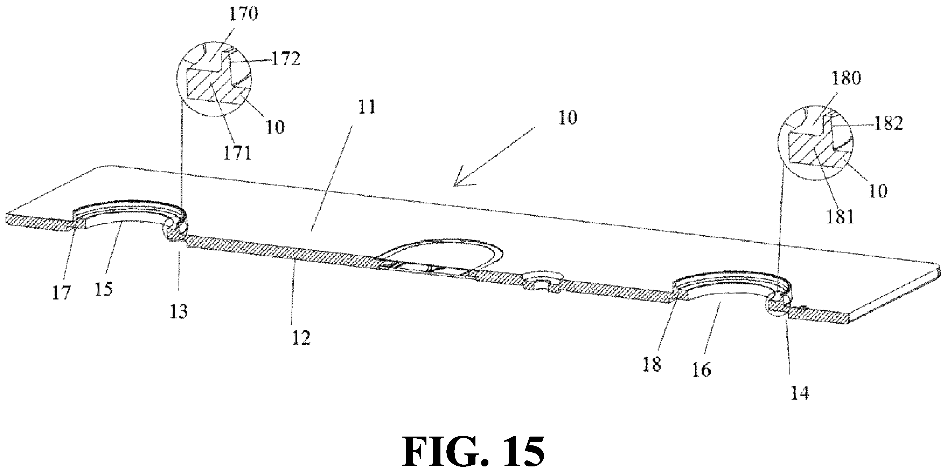

As illustrated in FIG. 15, the end cover 10 of this embodiment is different from the end cover 10 of the first embodiment in the structures of the first protrusion portion 17 and the second protrusion portion 18. In this embodiment, the first protrusion portion 17 includes a first boss 171 and a second boss 172. The first boss 171 protrudes from the first surface 11 and surrounds the first mounting hole 15. The first boss 171 is a circular annular protrusion. An annular inner side surface of the first boss 171 is connected to and coplanar with a hole wall of the first mounting hole 15. An end surface of the first boss 171 positioned facing away from the first surface 11 is a first end surface 170. The second boss 172 protrudes from an edge of the first end surface 170. The first boss 171 and the second boss 172 are coaxial with the first mounting hole 15. An outer peripheral surface of the first boss 171 positioned facing away from an axis of the first mounting hole 15 is coplanar with an outer peripheral surface of the second boss 172 positioned facing away from the axis of the first mounting hole 15. The height of the first protrusion portion 17 is the sum of the height of the first boss 171 and the height of the second boss 172. The first end surface 170 is a surface of the first boss 171 positioned facing away from the end cover 10.

In this embodiment, the second boss 18 includes a third boss 181 and a fourth boss 182. The third boss 181 protrudes from the first surface 11 and surrounds the second mounting hole 16. The third boss 181 is a circular annular protrusion. An annular inner side surface of the third boss 181 is connected to and coplanar with a hole wall of the second mounting hole 16. An end surface of the third boss 181 positioned facing away from the first surface 11 is a second end surface 180. The second boss 172 protrudes from an edge of the second end surface 180. The third boss 181 and the fourth boss 182 are coaxial with the second mounting hole 16. an outer peripheral surface of the third boss 181 positioned facing away from an axis of the second mounting hole 16 is coplanar with an outer peripheral surface of the fourth boss 182 positioned facing away from the axis of the second mounting hole 16. The height of the second boss 18 is the sum of the height of the third boss 181 and the height of the fourth boss 182.

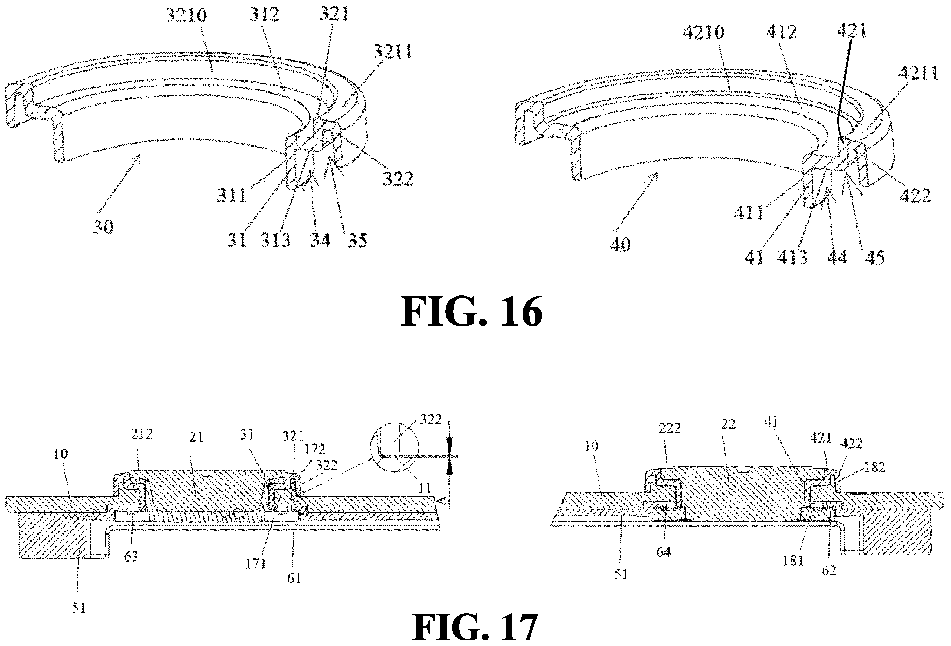

As illustrated in FIG. 16, in this embodiment, the first upper plastic member 30 of includes a first upper-plastic-member body 31 and a first lug 32. The first upper-plastic-member body 31 has a first inner-ring surface 311, a first step surface 312, and a first abutting surface 313. The first upper-plastic-member body 31 and the first lug 32 cooperatively define the first terminal-post through-hole 33. Different from the first embodiment, the first lug 32 includes a first sub-lug 321 and a first extension lug 322, and the first sub-lug 321 protrudes from an edge of the first step surface 312 away from an axial center (center) of the first upper plastic member 30.

The first extension lug 322 is formed by bending one end of the first sub-lug 321 parallel to the radial direction of the first upper plastic member 30 (radial direction of the terminal-post through-hole) and further bending and extending in a direction parallel to the axial direction of the first upper plastic member 30 (axial direction of the terminal-post through-hole). A third clamping sub-gap 35 is defined between the first extension lug 322 and the first sub-lug 321. A first clamping sub-gap 34 is defined between the first upper-plastic-member body 31 and a part of the first extension lug 322. The first clamping sub-gap 34 and the third clamping sub-gap 35 are in communication with each other and may be referred to as a first clamping gap. In this embodiment, the first sub-lug 321, the first extension lug 322, and the first upper-plastic-member body 31 are coaxially disposed, the diameter of the first extension lug 322 is the greatest among the three, and the first extension lug 322 surrounds the outer periphery of the first upper-plastic-member body 31 and the first sub-lug 321.

It can be understood that in one embodiment, the first upper-plastic-member body 31 has a T-shaped cylindrical shape as a whole, and includes a first section (not marked in the figure) and a second section (not marked in the figure) connected to the first section. The first section is cylindrical, and the second section is annular sheet-shaped. The second section is connected to the first section at one end of the first section in the axial direction of the first section, and extends away from the axial center of the first section. The first step surface 312 and the first abutting surface 313 are two surfaces of the second section in the thickness direction of the second section.

The first lug 32 has a first inner side surface 3210 and a first inclined surface 3211. The first inner side surface 3210 is a surface of the first sub-lug 321 positioned facing towards the axis. The first inner surface 3210 is connected to the first step surface 312. There is an angle between the first inner surface 3210 and the first step surface 312. The first inclined surface 3211 is connected between the first inner surface 3210 and an outer peripheral surface of the first extension lug 322. The first inclined surface 3211 is inclined away from the first inner surface 3210. In this embodiment, the first inclined surface 3211 is jointly formed by an end surface of the first sub-lug 321 and an end surface of the first extension lug 322 in the axial direction. In this embodiment, the first inclined surface 3211 and the first inner side surface 3210 may be connected through a flat surface, as described in the first embodiment, which will not be described herein.

In this embodiment, the second upper plastic member 40 has the same structure as the first upper plastic member 30. The second upper plastic member 40 includes a second upper-plastic-member body 41 and a second lug 42. The second upper-plastic-member body 41 has a second inner-ring surface 411, a second step surface 412, and a second abutting surface 413. The second upper-plastic-member body 41 and the second lug 42 cooperatively define the second terminal-post through-hole 43.

The second lug 42 includes a second sub-lug 421 and a second extension lug 422. The second sub-lug 421 protrudes from an edge of each of the second step surface 412 away from the axis center of the second upper plastic member 40. In this embodiment, the second sub-lug 421 and the second extension lug 422 are both annular structures.

The second extension lug 422 is formed by bending one end of the second sub-lug 421 parallel to the radial direction of the second upper plastic member 40 and further bending and extending in a direction parallel to the axial direction of the second upper plastic member 40. A fourth clamping sub-gap 45 is defined between the second extension lug 422 and the second sub-lug 421. A second clamping sub-gap 44 is defined between the second upper-plastic-member body 41 and a part of the second extension lug 422. The second clamping sub-gap 44 and the fourth clamping sub-gap 45 are in communication with each other and may be referred to as a second clamping gap. In this embodiment, the second extension lug 422, the second sub-lug 421, and the second upper-plastic-member body 41 are coaxially disposed.

The second lug 42 has a second inner side surface 4210 and a second inclined surface 4211. The second inner side surface 4210 is a surface of the second sub-lug 421 positioned facing towards the axis. The second inner side surface 4210 is connected to the second step surface 412. There is an angle between the second inner side surface 4210 and the second step surface 412. The second inclined surface 4211 is connected between the second inner surface 4210 and the outer peripheral surface of the second extension lug 422. The second inclined surface 4211 is inclined away from the second inner surface 4210. In this embodiment, the second inclined surface 4211 is jointly formed by an end surface of the second sub-lug 421 and an end surface of the second extension lug 422 in the axial direction.

As illustrated in FIG. 17, in this embodiment, the assembly and position relationship of the end cover 10, the first terminal-post 21 and the second terminal-post 22, the first upper plastic member 30 and the second upper plastic member 40, the lower plastic member 50, and the first pressing block 61 and the second pressing block 62 of the end cover assembly 100 can be specifically referred to the assembly relationship of the first embodiment. Hereinafter, only the assembly relationship of this embodiment different from the first embodiment will be described. Specifically, after the end cover 10, the first terminal-post 21 and the second terminal-post 22, the first upper plastic member 30 and the second upper plastic member 40, the lower plastic member 50, and the first pressing block 61 and the second pressing block 62 are all assembled and connected, the first upper-plastic-member body 31 surrounds the outer peripheral surface of the first terminal-post body 211, and the first sub-lug 321 surrounds the outer peripheral surface of the first flange 212 at the periphery of the first terminal-post body 211, and the first inner-ring surface 311 is positioned facing towards the outer periphery of the first terminal-post body 211. The first sub-lug 321 surrounds the outer peripheral surface of the first flange 212. The first sub-lug 321 at least covers the connection (connection interface) between the first metal portion 215 and the second metal portion 216, to protect the connection interface.

The first boss 171 of the first protrusion portion 17 is inserted into the first clamping sub-gap 34. The second boss 172 of the first protrusion portion 17 is inserted into the third clamping sub-gap 35. The first abutting surface 313 of the first upper plastic member 30 abuts against the first end surface 170 of the first protrusion portion 17 positioned facing away from the end cover 10. There is a gap A between a surface of a free end of the first extension lug 322 positioned facing away from the first sub-lug 321 and the first surface 11 around the first protrusion portion 17. The gap A can prevent the upper plastic member from abutting against the end cover 10, thereby preventing the unstable compression amount of the first sealing ring 63. In addition, when it is ensured that the gap *A* has a certain size, the capillary phenomenon of the liquid caused by the gap being too small (that is, when a gap is too small, the gap will adsorb the liquid falling on the surface of the gap and suck the liquid into the gap) can be avoided, so that the problem that the electrolyte is introduced into the battery through the gap A can be solved. The first inclined surface 3211 is positioned facing away from the first surface 11 and is inclined towards the first surface 11.

In this embodiment, in addition to achieving the technical effect described in the first embodiment, the first boss 171 and the second boss 172 are laminated to form the first protrusion portion 17, so that the gap between the first upper plastic member 30 and the first terminal-post 21 is raised relative to the end cover 10, and the uniformity of the overall thickness of the first upper plastic member 30 is ensured, thereby preventing the uneven thickness of the upper plastic member. Therefore, the formation of pits on the surface due to inconsistent cooling speed during the injection molding process can be avoided, and the technical problem that the electrolyte is accumulated in the pits and then overflows into the end cover can be solved. In addition, in the radial direction of the first upper plastic member 30, the distance from the outer peripheral surface of the first lug 32 to the recess peripheral wall of the first mounting recess 13 of the end cover 10 is reduced. The thickness of the recess bottom-wall position of the first mounting recess 13 is thinner than other parts of the end cover 10. The recess bottom-wall of the first mounting recess 13 overlaps, in the thickness direction of the end cover, the contact width of the first upper-plastic-member body 31 and the first protrusion portion 17 and the width of the first lug 32. Therefore, the strength of the recess bottom-wall of the first mounting recess 13 can be improved, that is, the strength of the recess bottom-wall of the first mounting recess 13 around the first mounting hole 15 can be improved, so that during assembly of the first terminal-post 21, the thrust on the first terminal-post 21 can be improved and the assembly stability can be ensured.

Furthermore, in this embodiment, a surface of the first lug 32 positioned facing away from the end cover 10 is the first inclined surface 3211, and the first inclined surface 3211 is inclined away from the first terminal-post 21, so that the shrinkage of the first upper plastic member 30 can be avoided from defining pits during injection molding. When the electrolyte is injected, the electrolyte falling on the first inclined surface will flow downwards due to the inclined surface, and the first inclined surface 3211 can prevent the electrolyte from accumulating and preventing the electrolyte from entering the inside of the end cover assembly through the gap between the first upper plastic member 30 and the first terminal-post 21.

Similarly, the assembly relationship between the second terminal-post 22, the second upper plastic member 40, the second pressing block 62, the second sealing ring 64, the end cover 10, and the lower plastic member 50 of the second embodiment can be referred to the above description of the assembly of the first terminal-post 21 and related structures thereof, and the resulting effect can also refer to the above description, which will not be repeated here.

The above descriptions are merely some embodiments and implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An end cover assembly (100) for an energy-storage apparatus (1000), comprising an end cover (10), an upper plastic member (30, 40), and a terminal post (21, 22), wherein the end cover (10) has a first surface (11) and a second surface (12) positioned facing away from the first surface (11) in a thickness direction of the end cover assembly (100), the upper plastic member (30, 40) is corrodible, and the terminal post (21, 22) comprises a terminal-post body (211, 221) and a flange (212, 222) connected to one end of the terminal-post body (211, 221);
the end cover (10) further defines a mounting hole (15, 16), the mounting hole (15, 16) extends through the first surface (11) and the second surface (12), a protrusion portion (17, 18) protrudes from the first surface (11), the protrusion portion (17, 18) surrounds the mounting hole (15, 16), and the protrusion portion (17, 18) has an end surface (170, 180);
the upper plastic member (30, 40) comprises an upper-plastic-member body (31, 41) and a lug (32, 42), the upper-plastic-member body (31, 41) has a step surface (312, 412) and an abutting surface (313, 413), the step surface (312, 412) is positioned facing away from the abutting surface (313, 413) in a height direction of the upper plastic member (30, 40), the lug (32, 42) protrudes from an edge of the step surface (312, 412) away from a center of the upper plastic member (30, 40), and the upper-plastic-member body (31, 41) and the lug (32, 42) cooperatively define a terminal-post through-hole (33, 43); and
the terminal post (21, 22) passes through the terminal-post through-hole (33, 43), a surface of the flange (212, 222) positioned facing towards the terminal-post body (211, 221) abuts against the step surface (312, 412), the lug (32, 42) surrounds an outer periphery of the flange (212, 222), the upper plastic member (30, 40) and the terminal post (21, 22) are accommodated in the mounting hole (15, 16), the lug (32, 42) exceeds the first surface (11), and the abutting surface (313, 413) abuts against the end surface (170, 180) in the thickness direction of the end cover assembly (100);
wherein the lug (32, 42) has an inner side surface (3210, 4210) and an inclined surface (3211, 4211), the inclined surface (3211, 4211) is connected between the inner side surface (3210, 4210) and an outer peripheral surface of the lug (32, 42), the inclined surface (3211, 4211) is inclined away from the inner side surface (3210, 4210), and the inclined surface (3211, 4211) is positioned facing away from the upper-plastic-member body (31, 41).

2. The end cover assembly (100) of claim 1, wherein a flat surface (3213, 4213) is connected between the inner side surface (3210, 4210) and the inclined surface (3211, 4211), and the flat surface (3213, 4213) has a width greater than or equal to 0.05 mm and less than or equal to 0.4 mm.

3. The end cover assembly (100) of claim 1 or 2, wherein the lug (32, 42) comprises a sub-lug (321, 421) and an extension lug (322, 422), the sub-lug (321, 421) protrudes from the edge of the step surface (312, 412) away from the center of the upper plastic member (30, 40), the extension lug (322, 422) protrudes from an edge of the abutting surface (313, 413) away from the center of the upper plastic member (30, 40), the extension lug (322, 422) is spaced apart from an outer peripheral surface of the upper-plastic-member body (31, 41) to define a clamping gap (34, 44); and the protrusion portion (17, 18) extends into the clamping gap (34, 44) and is limited between the extension lug (322, 422) and the outer peripheral surface of the upper-plastic-member body (31, 41).

4. The end cover assembly (100) of claim 3, wherein a surface of the sub-lug (321, 421) positioned facing away from the upper-plastic-member body (31, 41) is coplanar with a surface of the extension lug (322, 422) positioned facing away from the upper-plastic-member body (31, 41).

5. The end cover assembly (100) of claim 3, wherein a gap (A) is defined between an end surface of the extension lug (322, 422) positioned facing towards the first surface (11) of the end cover (10) and the first surface (11).

6. The end cover assembly (100) of claim 3, further comprising a lower plastic member (50), wherein the lower plastic member (50) comprises a lower-plastic-member body (51), the lower-plastic-member body (51) has a third surface (511) and a fourth surface (512), and the third surface (511) is positioned facing away from the fourth surface (512) in a thickness direction of the lower plastic member (50);
the lower plastic member (50) defines an avoidance recess (52, 53) and an assembly hole (58, 59), the avoidance recess (52, 53) is recessed from the fourth surface (512) towards the third surface (511), and the assembly hole (58, 59) extends through the third surface (511) and a recess bottom-wall of the avoidance recess (52, 53); and
the lower plastic member (50) and the end cover (10) are laminated, the third surface (511) is positioned facing towards the second surface (12), the mounting hole (15, 16) is positioned facing towards the assembly hole (58, 59), and the terminal-post body (211, 221) passes through the assembly hole (58, 59).

7. The end cover assembly (100) of claim 6, wherein the end cover (10) defines a mounting recess (13, 14), the mounting recess (13, 14) is recessed from the second surface (12) towards the first surface (11); and the lower plastic member (50) further comprises a protrusion (54, 55), the avoidance recess (52, 53) is recessed from the fourth surface (512) towards the third surface (511) and protrudes from the third surface (511) to form the protrusion (54, 55), the protrusion (54, 55) is accommodated in the mounting recess (13, 14), and a surface of the protrusion (54, 55) positioned facing towards the end cover (10) abuts against a recess bottom-wall (132, 142) of the mounting recess (13, 14).

8. The end cover assembly (100) of claim 5, further comprising a lower plastic member (50), a sealing ring (63, 64), and a pressing block (61, 62), wherein the lower plastic member (50) is laminated on the second surface (12), the terminal-post body (211, 221) passes through the lower plastic member (50), the sealing ring (63, 64) and the pressing block (61, 62) are sequentially sleeved at one end of the terminal-post body (211, 221) positioned facing away from the flange (212, 222), the pressing block (61, 62) abuts against the lower plastic member (50), and the sealing ring (63, 64) is clamped between the pressing block (61, 62) and the end cover (10).

9. The end cover assembly (100) of claim 1, wherein the terminal post (21) further comprises a first metal portion (215) and a second metal portion (216), the first metal portion (215) covers the second metal portion (216) at one side of the second metal portion (216) positioned facing away from the flange (212, 222), a connection interface (217) is defined between the first metal portion (215) and the second metal portion (216), and the connection interface (217) is a curved surface.

10. The end cover assembly (100) of claim 9, wherein in the thickness direction of the end cover assembly (100), the lug (32) covers the connection interface (217) between the first metal portion (215) and the second metal portion (216).

11. The end cover assembly (100) of claim 3, wherein the extension lug (322, 422) is formed by bending and extending from one end of the sub-lug (321, 421) and further bending and extending in a direction parallel to an axial direction of the terminal-post through-hole (33, 43), and the extension lug (322, 422) is spaced apart from each of the sub-lug (321, 421) and the upper-plastic-member body (31, 41) in a radial direction of the terminal-post through-hole (33, 43).

12. The end cover assembly (100) of claim 11, wherein the protrusion portion (17) comprises a first boss (171) and a second boss (172), the first boss (171) is connected to the first surface (11), the first boss (171) has an end surface (170) positioned facing away from the first surface (11), and the second boss (172) protrudes from an edge of the end surface (170) positioned facing away from an axis of the mounting hole (15); and
the second boss (172) extends into space between the extension lug (322) and the sub-lug (321), and the first boss (171) extends into space between the extension lug (322) and the upper-plastic-member body (31).

13. An energy-storage apparatus (1000), comprising the end cover assembly (100) of any one of claims 1 to 12, a housing (400), and a cell (300), wherein the cell (300) is mounted in the housing (400), and the end cover assembly (100) is mounted at one end of the housing (400) and configured to package the cell (300).

14. An electricity-consumption device (2000), comprising the energy-storage apparatus (1000) of claim 13, wherein the energy-storage apparatus (1000) is configured to power the electricity-consumption device (2000).

## Patentansprüche

1. Endabdeckungsbaugruppe (100) für eine Energiespeichervorrichtung (1000), umfassend eine Endabdeckung (10), ein oberes Kunststoffteil (30, 40) und einen Anschlussstift (21, 22), wobei die Endabdeckung (10) eine erste Oberfläche (11) und eine zweite Oberfläche (12) aufweist, die in Dickenrichtung der Endabdeckungsbaugruppe (100) abgewandt von der ersten Oberfläche (11) positioniert ist, das obere Kunststoffteil (30, 40) korrosionsanfällig ist und der Anschlussstift (21, 22) einen Anschlussstiftkörper (211, 221) und einen mit einem Ende des Anschlussstiftkörpers (211, 221) verbundenen Flansch (212, 222) umfasst;
die Endabdeckung (10) definiert ferner ein Befestigungsloch (15, 16), das Befestigungsloch (15, 16) erstreckt sich durch die erste Oberfläche (11) und die zweite Oberfläche (12), ein Vorsprungsabschnitt (17, 18) steht von der ersten Oberfläche (11) hervor, der Vorsprungsabschnitt (17, 18) umgibt das Befestigungsloch (15, 16) und das Vorsprungsabschnitt (17, 18) hat eine Endfläche (170, 180);
das obere Kunststoffteil (30, 40) umfasst einen Körper (31, 41) des oberen Kunststoffteils und einen Zapfen (32, 42), der Körper (31, 41) des oberen Kunststoffteils weist eine Stufenfläche (312, 412) und eine Anlagefläche (313, 413) auf, die Stufenfläche (312, 412) ist in der Höhenrichtung des oberen Kunststoffteils (30, 40) abgewandt von der Anlagefläche (313, 413) positioniert, der Zapfen (32, 42) steht von einem Rand der Stufenfläche (312, 412) abgewandt von dem Zentrum des oberen Kunststoffteils (30, 40) hervor, und der Körper (31, 41) des oberen Kunststoffteils und der Zapfen (32, 42) bilden gemeinsam ein Durchgangsloch (33, 43) für den Anschlussstift; und
der Anschlussstift (21, 22) verläuft durch das Durchgangsloch (33, 43) für den Anschlussstift, eine Oberfläche des Flansches (212, 222), die dem Anschlussstiftkörper (211, 221) zugewandt positioniert ist, liegt an der Stufenfläche (312, 412) an, der Zapfen (32, 42) umgibt den Außenumfang des Flansches (212, 222), das obere Kunststoffteil (30, 40) und der Anschlussstift (21, 22) sind in dem Befestigungsloch (15, 16) untergebracht, der Zapfen (32, 42) ragt über die erste Oberfläche (11) hinaus, und die Anlagefläche (313, 413) liegt in Dickenrichtung der Endabdeckungsbaugruppe (100) an der Endfläche (170, 180) an;
wobei der Zapfen (32, 42) eine innere Seitenfläche (3210, 4210) und eine geneigte Oberfläche (3211, 4211) aufweist, die geneigte Oberfläche (3211, 4211) zwischen der inneren Seitenfläche (3210, 4210) und einer Außenumfangsfläche des Zapfens (32, 42) verbunden ist, die geneigte Oberfläche (3211, 4211) abgewandt von der inneren Seitenfläche (3210, 4210) geneigt ist und die geneigte Oberfläche (3211, 4211) abgewandt von dem Körper (31, 41) des oberen Kunststoffteils positioniert ist.

2. Endabdeckungsbaugruppe (100) nach Anspruch 1, wobei eine ebene Oberfläche (3213, 4213) zwischen der inneren Seitenfläche (3210, 4210) und der schrägen Oberfläche (3211, 4211) verbunden ist, und die ebene Oberfläche (3213, 4213) eine Breite aufweist, die größer oder gleich 0,05 mm und kleiner oder gleich 0,4 mm ist.

3. Endabdeckungsbaugruppe (100) nach Anspruch 1 oder 2, wobei der Zapfen (32, 42) einen Unterzapfen (321, 421) und einen Verlängerungszapfen (322, 422) umfasst, der Unterzapfen (321, 421) von dem Rand der Stufenfläche (312, 412) abgewandt von dem Zentrum des oberen Kunststoffteils (30, 40) hervorsteht, der Verlängerungszapfen (322, 422) von einem Rand der Anlagefläche (313, 413) abgewandt von dem Zentrum des oberen Kunststoffteils (30, 40) hervorsteht, der Verlängerungszapfen (322, 422) von einer Außenumfangsfläche des Körpers (31, 41) des oberen Kunststoffteils beabstandet ist, um einen Klemmspalt (34, 44) zu definieren; und der Vorsprungsabschnitt (17, 18) sich in den Klemmspalt (34, 44) erstreckt und zwischen dem Verlängerungszapfen (322, 422) und der Außenumfangsfläche des Körpers (31, 41) des oberen Kunststoffteils begrenzt ist.

4. Endabdeckungsbaugruppe (100) nach Anspruch 3, wobei eine Oberfläche des Unterzapfens (321, 421), die abgewandt von dem Körper (31, 41) des oberen Kunststoffteils positioniert ist, eben mit einer Oberfläche der Verlängerungslasche (322, 422) ist, die abgewandt von dem Körper (31, 41) des oberen Kunststoffteils positioniert ist.

5. Endabdeckungsbaugruppe (100) nach Anspruch 3, wobei ein Spalt (A) zwischen einer Endfläche des Verlängerungszapfens (322, 422), der der ersten Oberfläche (11) der Endabdeckung (10) zugewandt positioniert ist, und der ersten Oberfläche (11) definiert ist.

6. Endabdeckungsbaugruppe (100) nach Anspruch 3, ferner umfassend ein unteres Kunststoffteil (50), wobei das untere Kunststoffteil (50) einen Körper (51) des unteren Kunststoffteils umfasst, der Körper (51) des unteren Kunststoffteils eine dritte Oberfläche (511) und eine vierte Oberfläche (512) aufweist, und die dritte Oberfläche (511) in Dickenrichtung des unteren Kunststoffteils (50) abgewandt von der vierten Oberfläche (512) positioniert ist;
das untere Kunststoffteil (50) definiert eine Ausweichvertiefung (52, 53) und ein Montageloch (58, 59), die Ausweichvertiefung (52, 53) ist von der vierten Oberfläche (512) zur dritten Oberfläche (511) hin vertieft, und das Montageloch (58, 59) erstreckt sich durch die dritte Oberfläche (511) und eine vertiefte Bodenwand der Ausweichvertiefung (52, 53); und
das untere Kunststoffteil (50) und die Endabdeckung (10) sind laminiert, die dritte Oberfläche (511) ist der zweiten Oberfläche (12) zugewandt positioniert, das Befestigungsloch (15, 16) ist dem Montageloch (58, 59) zugewandt positioniert, und der Anschlussstiftkörper (211, 221) verläuft durch das Montageloch (58, 59).

7. Endabdeckungsbaugruppe (100) nach Anspruch 6, wobei die Endabdeckung (10) eine Montagevertiefung (13, 14) definiert, die Montagevertiefung (13, 14) von der zweiten Oberfläche (12) zur ersten Oberfläche (11) hin vertieft ist; und das untere Kunststoffteil (50) ferner einen Vorsprung (54, 55) umfasst, die Ausweichvertiefung (52, 53) von der vierten Oberfläche (512) zur dritten Oberfläche (511) hin vertieft ist und von der dritten Oberfläche (511) hervorsteht, um den Vorsprung (54, 55) zu bilden, der Vorsprung (54, 55) in der Montagevertiefung (13, 14) aufgenommen ist, und eine Oberfläche des Vorsprungs (54, 55), die der Endabdeckung (10) zugewandt positioniert ist, an einer vertieften Bodenwand (132, 142) der Montagevertiefung (13, 14) anliegt.

8. Endabdeckungsbaugruppe (100) nach Anspruch 5, ferner umfassend ein unteres Kunststoffteil (50), einen Dichtungsring (63, 64) und einen Pressblock (61, 62), wobei das untere Kunststoffteil (50) auf der zweiten Oberfläche (12) laminiert ist, der Anschlussstiftkörper (211, 221) durch das untere Kunststoffteil (50) verläuft, der Dichtungsring (63, 64) und der Pressblock (61, 62) nacheinander auf ein Ende des Anschlussstiftkörpers (211, 221) aufgesteckt sind, das abgewandt von dem Flansch (212, 222) positioniert ist, der Pressblock (61, 62) liegt an das untere Kunststoffteil (50) an und der Dichtungsring (63, 64) ist zwischen dem Pressblock (61, 62) und der Endabdeckung (10) eingeklemmt.

9. Endabdeckungsbaugruppe (100) nach Anspruch 1, wobei der Anschlussstift (21) ferner einen ersten Metallabschnitt (215) und einen zweiten Metallabschnitt (216) umfasst, der erste Metallabschnitt (215) den zweiten Metallabschnitt (216) an einer Seite des zweiten Metallabschnitts (216) abdeckt, die abgewandt von dem Flansch (212, 222) positioniert ist, eine Verbindungsgrenzfläche (217) zwischen dem ersten Metallabschnitt (215) und dem zweiten Metallabschnitt (216) definiert ist, und die Verbindungsgrenzfläche (217) eine gekrümmte Oberfläche ist.

10. Endabdeckungsbaugruppe (100) nach Anspruch 9, wobei in Dickenrichtung der Endabdeckungsbaugruppe (100) der Zapfen (32) die Verbindungsgrenzfläche (217) zwischen dem ersten Metallabschnitt (215) und dem zweiten Metallabschnitt (216) abdeckt.

11. Endabdeckungsbaugruppe (100) nach Anspruch 3, wobei der Verlängerungszapfen (322, 422) durch Biegen und Verlängern von einem Ende des Unterzapfens (321, 421) aus gebildet wird und weiter in einer Richtung gebogen und verlängert wird, die parallel zur axialen Richtung des Durchgangslochs (33, 43) für den Anschlussstift verläuft, und wobei der Verlängerungszapfen (322, 422) in radialer Richtung des Durchgangslochs (33, 43) für den Anschlussstift von jeweils dem Unterzapfen (321, 421) und dem Körper (31, 41) des oberen Kunststoffteils beabstandet ist.

12. Endabdeckungsbaugruppe (100) nach Anspruch 11, wobei der Vorsprungabschnitt (17) einen ersten Absatz (171) und einen zweiten Absatz (172) umfasst, der erste Absatz (171) mit der ersten Oberfläche (11) verbunden ist, der erste Absatz (171) eine Endfläche (170) aufweist, die abgewandt von der ersten Oberfläche (11) positioniert ist, und der zweite Absatz (172) von einem Rand der Endfläche (170) hervorsteht, der abgewandt von einer Achse des Befestigungslochs (15) positioniert ist; und
der zweite Absatz (172) sich in den Raum zwischen dem Verlängerungszapfen (322) und dem Unterzapfen (321) erstreckt, und der erste Absatz (171) sich in den Raum zwischen dem Verlängerungszapfen (322) und dem Körper (31) des oberen Kunststoffteils erstreckt.

13. Energiespeichervorrichtung (1000), umfassend die Endabdeckungsbaugruppe (100) nach einem der Ansprüche 1 bis 12, ein Gehäuse (400) und eine Zelle (300), wobei die Zelle (300) in dem Gehäuse (400) montiert ist und die Endabdeckungsbaugruppe (100) an einem Ende des Gehäuses (400) montiert und so eingerichtet ist, dass sie die Zelle (300) umschließt.

14. Stromverbrauchsvorrichtung (2000), umfassend die Energiespeichervorrichtung (1000) nach Anspruch 13, wobei die Energiespeichervorrichtung (1000) so eingerichtet ist, dass sie die Stromverbrauchsvorrichtung (2000) antreibt.

## Revendications

1. Ensemble couvercle d'extrémité (100) pour un appareil de stockage d'énergie (1000), comportant un couvercle d'extrémité (10), un organe en plastique supérieur (30, 40), et une borne (21, 22), dans lequel le couvercle d'extrémité (10) présente une première surface (11) et une deuxième surface (12) positionnée orientée à l'opposé de la première surface (11) dans une direction d'épaisseur de l'ensemble couvercle d'extrémité (100), l'organe en plastique supérieur (30, 40) étant corrodible, et la borne (21, 22) comportant un corps de borne (211, 221) et une bride (212, 222) reliée à une extrémité du corps de borne (211, 221) ;
le couvercle d'extrémité (10) définit en outre un trou de montage (15, 16), le trou de montage (15, 16) s'étend à travers la première surface (11) et la deuxième surface (12), une partie de saillie (17, 18) fait saillie à partir de la première surface (11), la partie de saillie (17, 18) entoure le trou de montage (15, 16), et la partie de saillie (17, 18) présente une surface d'extrémité (170, 180) ;
l'organe en plastique supérieur (30, 40) comporte un corps d'organe en plastique supérieur (31, 41) et une patte (32, 42), le corps d'organe en plastique supérieur(31, 41) présente une surface de marche (312, 412) et une surface de butée (313, 413), la surface de marche (312, 412) est positionnée orientée à l'opposé de la surface de butée (313, 413) dans une direction de hauteur de l'organe en plastique supérieur (30, 40), la patte (32, 42) fait saillie à partir d'un bord de la surface de marche (312, 412) en s'éloignant d'un centre de l'organe en plastique supérieur (30, 40), et le corps d'organe en plastique supérieur (31, 41) et la patte (32, 42) définissent en coopération un trou traversant de borne (33, 43) ; et
la borne (21, 22) passe à travers le trou traversant de borne (33, 43), une surface de la bride (212, 222) positionnée orientée vers le corps de borne (211, 221) vient buter contre la surface de marche (312, 412), la patte (32, 42) entoure une périphérie externe de la bride (212, 222), l'organe en plastique supérieur (30, 40) et la borne (21, 22) sont logés dans le trou de montage (15, 16), la patte (32, 42) dépasse de la première surface (11), et la surface de butée (313, 413) vient buter contre la surface d'extrémité (170, 180) dans la direction d'épaisseur de l'ensemble couvercle d'extrémité (100) ;
dans lequel la patte (32, 42) présente une surface latérale interne (3210, 4210) et une surface inclinée (3211, 4211), la surface inclinée (3211, 4211) est reliée entre la surface latérale interne (3210, 4210) et une surface périphérique externe de la patte (32, 42), la surface inclinée (3211, 4211) est inclinée à l'opposé de la surface latérale interne (3210, 4210), et la surface inclinée (3211, 4211) est positionnée orientée à l'opposé du corps d'organe en plastique supérieur (31, 41).

2. Ensemble couvercle d'extrémité (100) selon la revendication 1, dans lequel une surface plane (3213, 4213) est reliée entre la surface latérale interne (3210, 4210) et la surface inclinée (3211, 4211), et la surface plane (3213, 4213) présente une largeur supérieure ou égale à 0,05 mm et inférieure ou égale à 0,4 mm.

3. Ensemble couvercle d'extrémité (100) selon la revendication 1 ou 2, dans lequel la patte (32, 42) comporte une patte secondaire (321, 421) et une patte d'extension (322, 422), la patte secondaire (321, 421) fait saillie à partir du bord de la surface de marche (312, 412) en s'éloignant du centre de l'organe en plastique supérieur (30, 40), la patte d'extension (322, 422) fait saillie à partir d'un bord de la surface de butée (313, 413) en s'éloignant du centre de l'organe en plastique supérieur (30, 40), la patte d'extension (322, 422) est espacée d'une surface périphérique externe du corps d'organe en plastique supérieur (31, 41) pour définir un espace de serrage (34, 44) ; et la partie en saillie (17, 18) s'étend dans l'espace de serrage (34, 44) et est limitée entre la patte d'extension (322, 422) et la surface périphérique externe du corps d'organe en plastique supérieur (31, 41).

4. Ensemble couvercle d'extrémité (100) selon la revendication 3, dans lequel une surface de la patte secondaire (321, 421) orientée à l'opposé du corps d'organe en plastique supérieur (31, 41) est coplanaire avec une surface de la patte d'extension (322, 422) positionnée orientée à l'opposé du corps d'organe en plastique supérieur (31, 41).

5. Ensemble couvercle d'extrémité (100) selon la revendication 3, dans lequel un espace (A) est défini entre une surface d'extrémité de la patte d'extension (322, 422) positionnée orientée vers la première surface (11) du couvercle d'extrémité (10) et la première surface (11).

6. Ensemble couvercle d'extrémité (100) selon la revendication 3, comprenant en outre un organe en plastique inférieur (50), dans lequel l'organe en plastique inférieur (50) comporte un corps d'organe en plastique inférieur (51), le corps d'organe en plastique inférieur (51) présente une troisième surface (511) et une quatrième surface (512), et la troisième surface (511) est positionnée orientée à l'opposé de la quatrième surface (512) dans une direction d'épaisseur de l'organe en plastique inférieur (50) ;
l'organe en plastique inférieur (50) définit un évidement d'évitement (52, 53) et un trou d'assemblage (58, 59), l'évidement d'évitement (52, 53) est évidé par rapport à la quatrième surface (512) en direction de la troisième surface (511), et le trou d'assemblage (58, 59) s'étend à travers la troisième surface (511) et une paroi inférieure d'évidement de l'évidement d'évitement (52, 53) ; et
l'organe en plastique inférieur (50) et le couvercle d'extrémité (10) sont stratifiés, la troisième surface (511) est positionnée orientée vers de la deuxième surface (12), le trou de montage (15, 16) est positionné orienté vers le trou d'assemblage (58, 59), et le corps de borne (211, 221) passe à travers le trou d'assemblage (58, 59).

7. Ensemble couvercle d'extrémité (100) selon la revendication 6, dans lequel le couvercle d'extrémité (10) définit un évidement de montage (13, 14), l'évidement de montage (13, 14) est évidé par rapport à la deuxième surface (12) en direction de la première surface (11) ; et l'organe en plastique inférieur (50) comporte en outre une saillie (54, 55), l'évidement d'évitement (52, 53) est évidé par rapport à la quatrième surface (512) en direction de la troisième surface (511) et fait saillie à partir de la troisième surface (511) pour former la saillie (54, 55), la saillie (54, 55) est reçue dans l'évidement de montage (13, 14), et une surface de la saillie (54, 55) positionnée orientée vers le couvercle d'extrémité (10) vient buter contre une paroi inférieure d'évidement (132, 142) de l'évidement de montage (13, 14).

8. Ensemble couvercle d'extrémité (100) selon la revendication 5, comportant en outre un organe en plastique inférieur (50), une bague d'étanchéité (63, 64), et un bloc de pression (61, 62), dans lequel l'organe en plastique inférieur (50) est stratifié sur la deuxième surface (12), le corps de borne (211, 221) passe à travers l'organe en plastique inférieur (50), la bague d'étanchéité (63, 64) et le bloc de pression (61, 62) sont séquentiellement emmanchés au niveau d'une extrémité du corps de borne (211, 221) positionnée orientée à l'opposé de la bride (212, 222), le bloc de pression (61, 62) vient buter contre l'organe en plastique inférieur (50), et la bague d'étanchéité (63, 64) est serrée entre le bloc de pression (61, 62) et le couvercle d'extrémité (10).

9. Ensemble couvercle d'extrémité (100) selon la revendication 1, dans lequel la borne (21) comporte en outre une première partie métallique (215) et une deuxième partie métallique (216), la première partie métallique (215) recouvre la deuxième partie métallique (216) au niveau d'un côté de la deuxième partie métallique (216) positionné orienté à l'opposé de la bride (212, 222), une interface de connexion (217) est définie entre la première partie métallique (215) et la deuxième partie métallique (216), et l'interface de connexion (217) est une surface incurvée.

10. Ensemble couvercle d'extrémité (100) selon la revendication 9, dans lequel, dans la direction d'épaisseur de l'ensemble couvercle d'extrémité (100), la patte (32) recouvre l'interface de connexion (217) entre la première partie métallique (215) et la deuxième partie métallique (216).

11. Ensemble couvercle d'extrémité (100) selon la revendication 3, dans lequel la patte d'extension (322, 422) est formée par flexion et extension à partir d'une extrémité de la patte secondaire (321, 421) et flexion et extension supplémentaires dans une direction parallèle à une direction axiale du trou traversant de borne (33, 43), et la patte d'extension (322, 422) est espacée de chacune de la patte secondaire (321, 421) et du corps d'organe en plastique supérieur (31, 41) dans une direction radiale du trou traversant de borne (33, 43).

12. Ensemble couvercle d'extrémité (100) selon la revendication 11, dans lequel la partie en saillie (17) comporte un premier bossage (171) et un deuxième bossage (172), le premier bossage (171) est relié à la première surface (11), le premier bossage (171) présente une surface d'extrémité (170) positionnée orientée à l'opposé de la première surface (11), et le deuxième bossage (172) fait saillie à partir d'un bord de la surface d'extrémité (170) positionné orienté à l'opposé d'un axe du trou de montage (15) ; et
le deuxième bossage (172) s'étend dans l'espace entre la patte d'extension (322) et la patte secondaire (321), et le premier bossage (171) s'étend dans l'espace entre la patte d'extension (322) et le corps d'organe en plastique supérieur (31).

13. Appareil de stockage d'énergie (1000), comportant l'ensemble couvercle d'extrémité (100) selon l'une quelconque des revendications 1 à 12, un logement (400) et une cellule (300), dans lequel la cellule (300) est montée dans le logement (400), et l'ensemble couvercle d'extrémité (100) est monté au niveau d'une extrémité du logement (400) et configuré pour conditionner la cellule (300).

14. Dispositif de consommation d'électricité (2000) comportant l'appareil de stockage d'énergie (1000) selon la revendication 13, dans lequel l'appareil de stockage d'énergie (1000) est configuré pour alimenter le dispositif de consommation d'électricité (2000).
